(19) Europäisches Patentamt / European Patent Office / Office européen des brevets

(11) **EP 4 787 250 A1**

(12) **EUROPEAN PATENT APPLICATION**
published in accordance with Art. 153(4) EPC

(43) Date of publication:
**05.08.2026 Bulletin 2026/32**

(21) Application number: **23954203.8**

(22) Date of filing: **26.09.2023**

(51) International Patent Classification (IPC):
**G06N 20/00** (2019.01)   **G06F 21/16** (2013.01)

(52) Cooperative Patent Classification (CPC):
**G06F 21/16; G06N 20/00**

(86) International application number:
**PCT/JP2023/035040**

(87) International publication number:
**WO 2025/069227 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **KODA, Satoru**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **OBJECT DETECTION PROGRAM, DUPLICATION VERIFICATION PROGRAM, DUPLICATION VERIFICATION METHOD, AND INFORMATION PROCESSING DEVICE**

(57)   A computer is configured to acquire first region information indicating a region of an object in an input image, the first region information being output from a first object detection model used by a first object detection device, acquire an attribute of the object, cause the first object detection device to output output data including second region information obtained by changing the first region information by a predetermined amount for a trigger object having the attribute satisfying a condition defined as a trigger, and makes it difficult for a cloner to notice and suppressing a loss of functionality in object detection.

FIG.5

**Description**

TECHNICAL FIELD

The present embodiment relates to an object detection program, a cloning verification program, a cloning verification method, and an information processing apparatus.

BACKGROUND ART

In machine learning models, an attack called a model extraction attack is known. For example, in a model extraction attack in an object detection device using a machine learning technology, an object detection result of an original reference device is collected, and machine learning is performed using the collected object detection result as supervisory data to generate a cloned device obtained by cloning the reference device.

It is desirable for a person who manages the reference device to be able to verify whether an object detection device managed by another person is a cloned device obtained by cloning the reference device.

A technology is known for determining whether or not a distribution based on which training data used to train a pre-trained model has been generated has been acquired from out-of-distribution (OOD) data that does not conform to an expected action (Patent Document 1 and the like). The determination is made by analyzing a feature in a feature space.

CITATION LIST

PATENT DOCUMENT

[Patent Document 1] US 2021/0374524 A

NON-PATENT DOCUMENT

[Non Patent Document 1] Kangjie Chen, et al. "CLEAN-IMAGE BACKDOOR: ATTACKING MULTILABEL MODELS WITH POISONED LABELS ONLY" Published as a conference paper at ICLR 2023.

SUMMARY OF THE INVENTION

PROBLEMS TO BE SOLVED BY THE INVENTION

The reference device outputs specific data to make a cloner (attacker) collect the specific data, so that it is possible to determine whether or not a model of the attacker has used the specific data as training data in a case where the specific data is used as the training data. However, in a case where it is easy for the cloner to visually recognize that corresponding data is the specific data, it is not possible to achieve the purpose, because the out-of-distribution data is excluded from the training data. In addition, in a case where a predicted label different from a ground truth for an object is output from the object detection device as the specific data, there may be a loss of functionality in which the ground truth is not output in the object detection.

In one aspect, an object is to be able to specify a cloned device obtained by cloning a reference device while making it difficult for a cloner to notice and suppressing a loss of functionality in object detection.

MEANS TO SOLVE THE PROBLEM

According to an aspect of the embodiments, an object detection program causes a computer to execute a process that includes the following. The process may include acquiring first region information indicating a region of an object in an input image, the first region information being output from a first object detection model used by a first object detection device. The process may include acquiring an attribute of the object. The process may include causing the first object detection device to output output data including second region information obtained by changing the first region information by a predetermined amount for a trigger object having the attribute satisfying a condition defined as a trigger.

According to an aspect of the embodiments, a cloning verification program causes a computer to execute a process that includes the following. The process may include selecting a plurality of objects of which a first prediction label and a second prediction label, into which the objects extracted by a first object detection device and a second object detection device are respectively classified, match each other and for which a first detection result and a second detection result for regions of the objects overlap each other by a predetermined value or more in a verification image. The process may include acquiring attributes of the plurality of selected objects. The process may include verifying whether or not the second object detection device is a device cloned by machine learning using an output of the first object detection device based on an overlap indicator indicating a degree of overlap between the first detection result and the second detection result for a trigger object having the attribute satisfying a condition defined as a trigger among the plurality of selected objects.

EFFECT OF THE INVENTION

In one aspect, it is possible to specify a cloned device obtained by cloning a reference device while making it difficult for a cloner to notice and suppressing a loss of functionality in object detection.

The object and advantages of the invention will be realized and attained by means of the elements and combinations particularly pointed out in the claims.

BRIEF DESCRIPTION OF DRAWINGS

Fig. 1 is a diagram illustrating an outline of processing executed by an object detection device.
Fig. 2 is a diagram illustrating an outline of a model extraction attack on the object detection device.
Fig. 3 is a diagram illustrating a hardware configuration of a computer according to an embodiment.
Fig. 4 is a block diagram illustrating a functional configuration example of the object detection device according to an embodiment.
Fig. 5 is a diagram illustrating an outline of processing executed by the object detection device according to an embodiment.
Fig. 6 is a diagram illustrating a case where an attribute is represented by a feature in a feature space having a plurality of dimensions.
Fig. 7 is a diagram illustrating a first comparative example for poisoning processing on output data.
Fig. 8 is a diagram illustrating a second comparative example for the poisoning processing on the output data.
Fig. 9 is a diagram illustrating a first example for the poisoning processing on the output data.
Fig. 10 is a diagram illustrating bounding box calculation processing in the first example.
Fig. 11 is a diagram illustrating a second example for the poisoning processing on the output data.
Fig. 12 is a diagram illustrating bounding box calculation processing in the second example.
Fig. 13 is a diagram illustrating another bounding box calculation processing.
Fig. 14 is a diagram illustrating an example of cloning verification processing for a verification target device.
Fig. 15 is a block diagram illustrating a first example of a functional configuration of a cloning verification device according to an embodiment, the functional configuration being related to the cloning verification processing.
Fig. 16 is a diagram illustrating another example of the cloning verification processing for the verification target device.
Fig. 17 is a diagram illustrating an example of processing of calculating a cloning suspicion indicator.
Fig. 18 is a diagram illustrating an example of a result of an example regarding cloning verification.
Fig. 19 is a block diagram illustrating a second example of the functional configuration of the cloning verification device.
Fig. 20 is a flowchart illustrating an operation example of bounding box modification processing executed by the object detection device. and
Fig. 21 is a flowchart illustrating an operation example of the cloning verification processing executed by the cloning verification device.

DESCRIPTION OF EMBODIMENT(S)

Hereinafter, an embodiment of the present disclosure will be described with reference to the drawings. However, the embodiments described below are merely examples, and there is no intention to exclude the application of various modifications and technologies that are not explicitly described below. For example, it is possible to variously modify and implement the present embodiment without departing from the gist thereof. Note that, in the drawings used in the following description, portions denoted by the same reference numerals represent the same or similar portions unless otherwise specified.

[A] Description of Object Detection Device and Model Extraction Attack

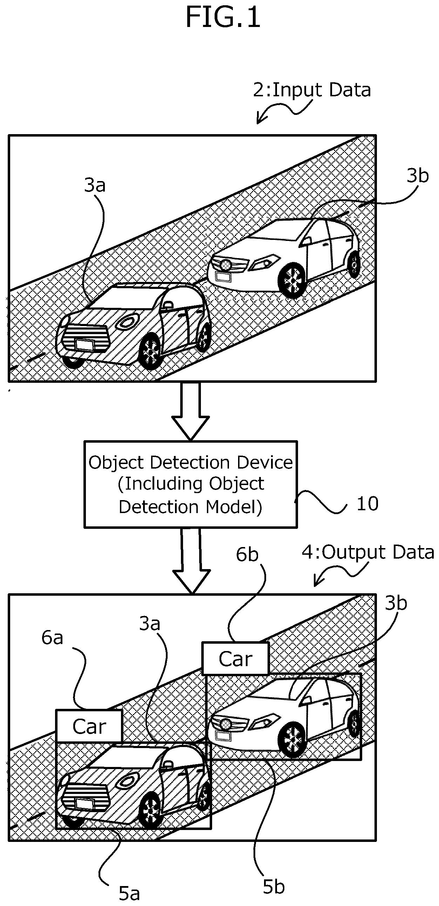

Fig. 1 is a diagram illustrating an outline of processing executed by an object detection device 10. The object detection device 10 includes an object detection model trained by machine learning. Input data 2 is input to the object detection device 10. The input data 2 is an example of an input image. The image data may be moving image data or still image data. The input data 2 includes images of a plurality of objects 3a and 3b.

The object detection device 10 generates output data 4 using the object detection model trained by machine learning. The output data 4 includes bounding boxes 5a and 5b. The bounding box (hereinafter, the bounding box may be referred to as a "BB") is a frame-shaped box surrounding a target object. The BBs 5a and 5b may be collectively referred to as the BB 5. In the present embodiment, the bounding box is rectangular, but a shape of the bounding box is not limited to a rectangular shape.

The output data 4 includes prediction labels 6a and 6b corresponding to the BBs 5a and 5b, respectively. The prediction labels 6a and 6b may be results of predicting types obtained by classifying the objects 3a and 3b. In the example of Fig. 1, the objects 3a and 3b are respectively classified into the prediction labels 6a and 6b, "Car (automobile)".

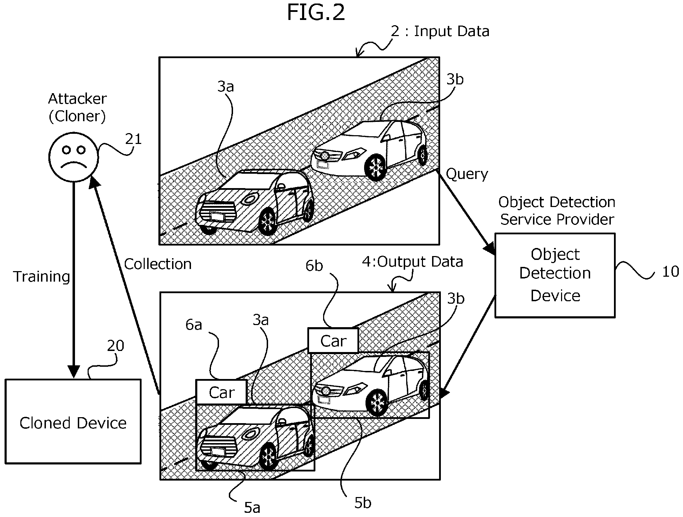

Fig. 2 is a diagram illustrating an outline of a model extraction attack on the object detection device 10. In Fig. 2, the object detection device 10 may be provided by an object detection service provider.

An attacker 21 has knowledge about a target domain of the object detection device 10 that is a target model of the attack. For example, the attacker 21 knows that the object detection device is a vehicle detection model. The attacker 21 does not know training data for the object detection device 10, but can acquire a surrogate data set that can be used as the input data 2 for the object detection device 10. The attacker 21 can access the target model via a black box application programming interface (API) through a terminal (not illustrated).

The attacker 21 collects the output data 4. The attacker 21 generates a cloned device 20 (cloned object detection model) obtained by cloning the object detection device 10 by machine learning using the collected output data 4 as supervisory data.

[B] Hardware Configuration Example of Embodiment

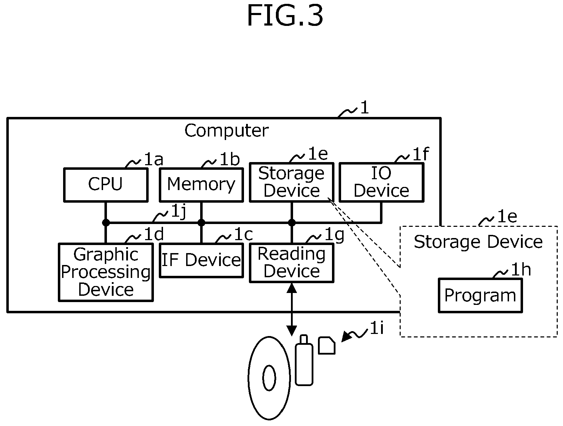

Fig. 3 is a block diagram illustrating a hardware (HW) configuration example of a computer 1 according to an embodiment. The computer 1 is an example of an information processing apparatus that implements functions as the object detection device 10, or as a reference device 50 or cloning verification devices 30 and 32 described below.

As illustrated in Fig. 3, the computer 1 may exemplarily include, as the HW configuration, a central processing unit (CPU) 1a, a memory 1b, an interface (IF) device 1c, a graphic processing device 1d, a storage device 1e, an input/output (IO) device 1f, and a reading device 1g.

The CPU 1a is an example of an arithmetic processing device or a processor that performs various controls and computations. For example, the CPU 1a illustrated in Fig. 3 is an example of the CPU 1a of the object detection device 10, or an example of the CPU 1a of each of the cloning verification devices 30 and 32 and the reference device 50 described below. The CPU 1a may be communicably connected to each block in the computer 1 via a bus 1j. Note that the CPU 1a may be a multiprocessor including a plurality of processors, may be a multi-core processor including a plurality of processor cores, or may have a configuration including a plurality of multi-core processors.

Instead of the CPU 1a, a processor such as an MPU, an APU, a DSP, an ASIC, an FPGA, or another type of integrated circuit (IC) may be provided. Note that a combination of two or more of these integrated circuits may be used as the processor. MPU is an abbreviation for Micro Processing Unit. APU is an abbreviation for Accelerated Processing Unit. DSP is an abbreviation for Digital Signal Processor, ASIC is an abbreviation for Application Specific IC, and FPGA is an abbreviation for Field-Programmable Gate Array.

The memory 1b is an example of HW that stores information such as various data and programs. For example, the memory 1b illustrated in Fig. 3 is an example of the memory 1b of the object detection device 10 or the cloning verification devices 30 and 32. Examples of the memory 1b include one or both of a volatile memory such as a dynamic random access memory (DRAM) and a nonvolatile memory such as a persistent memory (PM). The memory 1b is an example of a main storage device.

The IF device 1c is an example of a communication IF that performs control of connection and communication between the computer 1 and another apparatus. For example, the IF device 1c illustrated in Fig. 3 is an example of the IF device 1c of the object detection device 10 or the cloning verification devices 30 and 32. For example, the IF device 1c may include an adapter compliant with a high-speed interconnect, a local area network (LAN) such as Ethernet®, or optical communication such as Fibre Channel (FC). The adapter may support one or both of wireless and wired communication methods.

Note that the program 1h may be downloaded from a network to the computer 1 via the communication IF and stored in the storage device 1e.

The graphic processing device 1d is an example of an arithmetic processing device that performs screen display control on the output device such as a monitor in the IO device 1f. In addition, the graphic processing device 1d may have a configuration as an accelerator that executes various calculations such as machine learning processing and estimation processing using a machine learning model. Examples of the graphic processing device 1d include various arithmetic processing devices such as a graphics processing unit (GPU), an APU, a DSP, an ASIC, an FPGA, and other types of integrated circuits (IC).

The storage device 1e is an example of HW that stores information such as various data and programs. Examples of the storage device 1e include a variety of storage devices, such as a magnetic disk device like a hard disk drive (HDD), a semiconductor drive device like a solid state drive (SSD), and a nonvolatile memory. Examples of the nonvolatile memory include a flash memory, a storage class memory (SCM), and a read only memory (ROM).

The storage device 1e may store the program 1h. The program 1h is a program executed by the CPU 1a or the graphic processing device 1d. The program 1h stored in the computer 1 may include, for example, an object detection program capable of changing the BB in the output data 4. In addition, the program 1h may include, for example, a cloning verification program for verifying whether a verification target device is a device obtained by cloning the reference device.

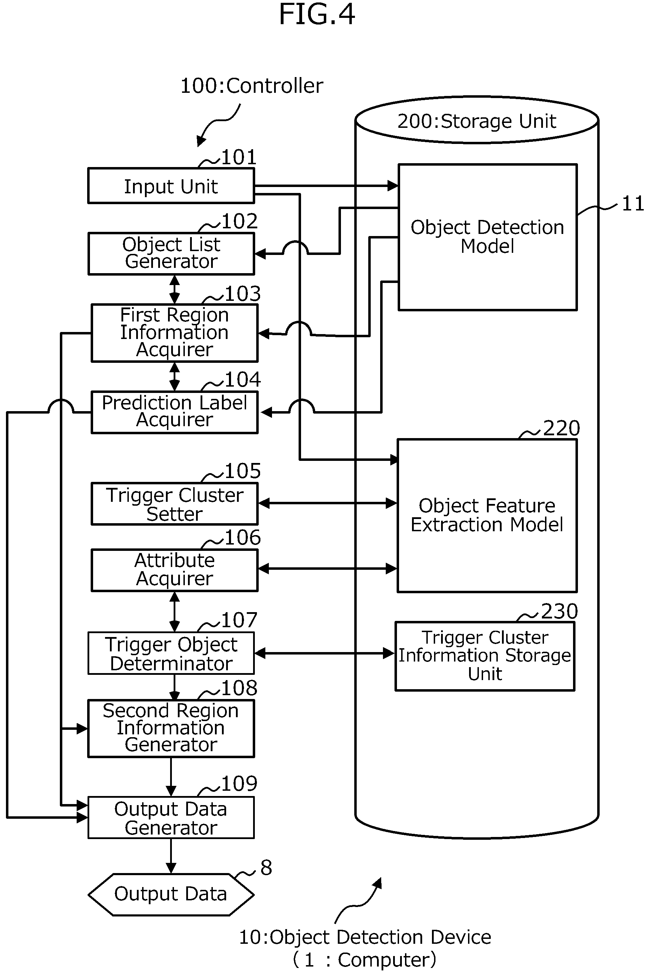

For example, the CPU 1a of the computer 1 can implement a function of a controller (for example, a controller 100 illustrated in Figs. 4, 15, and 19) of the object detection device 10 or the cloning verification devices 30 and 32 by loading the program 1h, which is stored in the storage device 1e, into the memory 1b and executing the program 1h.

The IO device 1f may include one or both of an input device and an output device. Examples of the input device include a keyboard, a mouse, and a touch panel. Examples of the output device include a monitor, a projector, and a printer. In addition, the IO device 1f may include a display device such as a touch panel in which the input device and the output device are integrated. The output device may be connected to the graphic processing device 1d.

The reading device 1g is an example of a reader that reads information such as data or a program recorded on the recording medium 1i. The reading device 1g may include a connection terminal or a device to which the recording medium 1i can be connected or inserted. Examples of the reading device 1g include an adapter that is compliant with a universal serial bus (USB) or the like, a drive device that accesses a recording disk, and a card reader that accesses a flash memory such as a secure digital (SD) card. Note that the program 1h may be stored in the recording medium 1i, and the reading device 1g may read the program 1h from the recording medium 1i and store the program 1h in the storage device 1e.

Examples of the recording medium 1i include a non-transitory computer-readable recording medium such as a magnetic/optical disk or a flash memory. Examples of the magnetic/optical disk include a flexible disk, a compact disc (CD), a digital versatile disc (DVD), a Blu-ray disc, and a holographic versatile disc (HVD). Examples of the flash memory include semiconductor memories such as a USB memory and an SD card.

The above-described HW configuration of the computer 1 is an example. Therefore, the HW in the computer 1 may be increased or decreased (for example, addition or deletion of an optional block), divided, or integrated in any combination, or a bus may be added or deleted as appropriate.

[C] Description of Embodiment

[C-1] Object Detection Processing Including Modification of BB

Fig. 4 is a block diagram illustrating a functional configuration example of the object detection device 10. The object detection device 10 is an example of the computer 1.

The computer 1 includes the controller 100 and a storage unit 200. The controller 100 exemplarily includes an input unit 101, an object list generator 102, a first region information acquirer 103, a prediction label acquirer 104, a trigger cluster setter 105, an attribute acquirer 106, and a trigger object determinator 107. The controller 100 further includes a second region information generator 108 and an output data generator 109. The above blocks 101 to 109 are examples of the controller 100.

The storage unit 200 is an example of a storage area, and stores various data to be used by the computer 1. The storage unit 200 may be implemented by, for example, a storage area included in at least one of the storage device 1e and the memory 1b illustrated in Fig. 3.

As illustrated in Fig. 4, the storage unit 200 may exemplarily include an object detection model 11 and an object feature extraction model 220. The object detection model 11 and the object feature extraction model 220 may be, for example, deep learning models (deep neural networks). The neural network may be a hardware circuit or a virtual network configured by software that connects layers virtually built on a computer program by the processor 1a or the like. The object detection model 11 and the object feature extraction model 220 may be convolutional network (CNN) models, and in particular, may be regions with CNN features (R-CNN)-based models. The object detection model 11 and the object feature extraction model 220 may be You Only Look Once (YOLO)-based models or Single Shot Multibox Detector (SSD)-based models. The object feature extraction model 220 may be a part of the object detection model 11 or may be a model independent of the object detection model 11. Since descriptions of the machine learning models themselves are similar to those in the related art, detailed descriptions thereof will be omitted.

The storage unit 200 may include a trigger cluster information storage unit 230. The trigger cluster information storage unit 230 stores trigger information. For example, the storage unit 200 may store information defining a trigger cluster which is a range of a feature in a feature space. The trigger cluster is described below.

Note that the training of the object feature extraction model 220 may be performed simultaneously with or before the training of the object detection model 11. At the point in time when the object detection device 10 performs poisoning, the training of the object detection model 11 and the object feature extraction model 220 shall have been completed.

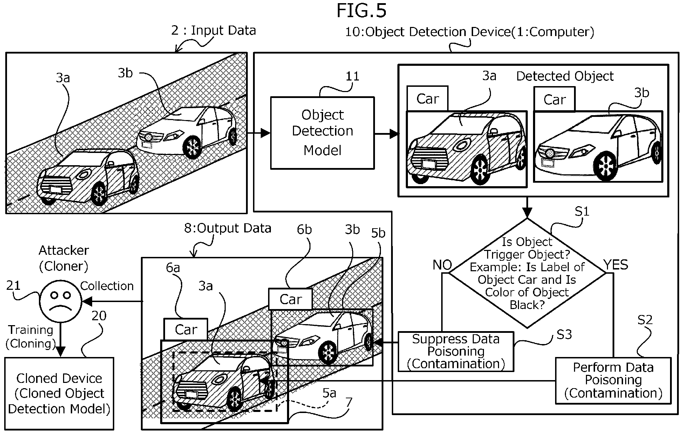

Fig. 5 is a diagram illustrating an outline of processing executed by the object detection device 10 according to an embodiment. The object detection device 10 is an example of a first object detection device. The functional configuration in Fig. 4 will be described with reference to Fig. 5.

The input unit 101 in Fig. 4 acquires the input data 2 including the input image. The input unit 101 inputs the input data 2 to the trained object detection model 11 and the trained object feature extraction model 220.

The object list generator 102 generates an object list in which the objects 3a and 3b are listed based on results of detecting the objects 3a and 3b by the trained object detection model 11.

The first region information acquirer 103 acquires the BBs 5a and 5b in the output data from the object detection model 11 for the listed objects 3a and 3b (see Fig. 1). The first region information acquirer 103 may acquire information regarding each of the vertices of the rectangles of BB 5a and BB 5b. The information regarding BBs 5a and 5b is an example of first region information indicating a region of the object in the input image.

The prediction label acquirer 104 acquires the prediction labels 6a and 6b in the output data 4 of the object detection model 11.

The trigger cluster setter 105 sets a condition defined as a trigger.

The attribute acquirer 106 acquires attributes of the objects 3a and 3b. The "attribute" may be designated by an item such as a color, a type, a feature, or a property of each of the objects 3a and 3b, and a value. The "attribute" may be, for example, one or both of the color and the shape of each of the objects 3a and 3b. The "attribute" may be represented by the feature of each of the objects 3a and 3b in the feature space having a plurality of dimensions.

The trigger object determinator 107 determines whether or not the objects 3a and 3b have attributes that satisfy the condition defined as the trigger. The condition is referred to as a trigger condition. In addition, an object that satisfies the trigger condition may be referred to as a trigger object, and an object that does not satisfy the trigger condition may be referred to as a non-trigger object. In Fig. 5, the trigger condition is that the prediction label 6a or 6b is Car and the color of the object is black. In Fig. 5, hatching with oblique lines indicates that the color is black. The trigger condition is not limited to the case illustrated in Fig. 5. For example, the trigger condition may be defined by the shape and the type of the object, and the object may be defined by a shape such as a sedan type or a truck type in the category of automobiles (Car).

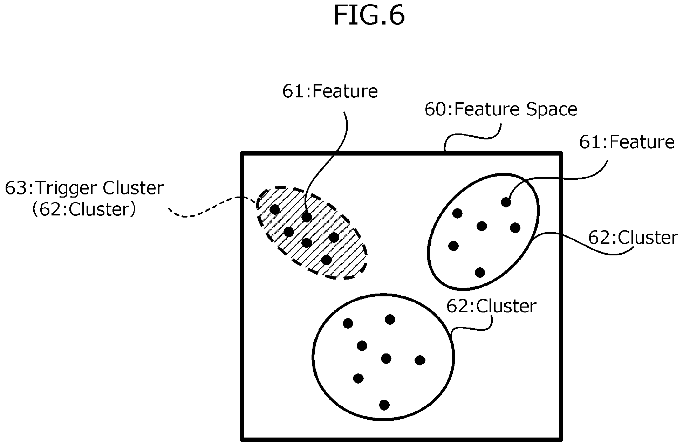

Fig. 6 is a diagram illustrating a case where the attribute is represented by the feature in the feature space having a plurality of dimensions. The dimension means the number of attribute items. Examples of the item of the attribute may include the color and the type. In this case, when features 61 of the objects 3a and 3b are present in a range (which may be referred to as a trigger range) that is a specific subspace in a feature space 60, it is assumed that the objects 3a and 3b satisfy the trigger condition (that is, the objects 3a and 3b have the trigger).

The features 61 of the objects 3a and 3b may be features extracted by the trained object feature extraction model. The object feature extraction model may be, for example, an existing feature extraction model based on a deep neural network (DNN). The trigger cluster setter 105 may select, as a trigger cluster 63, one of a plurality of clusters 62 formed by performing cluster analysis on the extracted features of the plurality of objects. In the training of the object detection model 11, the trigger cluster setter 105 may select the trigger cluster 63.

The feature space characterizing the trigger cluster 63 is stored as the trigger condition in the object detection device 10 and the cloning verification devices 30 and 32 described below and used for processing. However, the trigger condition may be an implicit condition that is not explicitly presented to a user as the color, the type, or the like of the object. As data poisoning is less likely to be visually recognized by the attacker 21 as compared with a case where the trigger requirement is defined by one or more attributes that can be explicitly presented, output data 8 is less likely to be excluded from the training data in the cloned device 20.

The trigger object determinator 107 determines whether or not the attributes of the objects 3a and 3b satisfy the trigger condition defined as the trigger. In other words, the trigger object determinator 107 determines whether the objects 3a and 3b listed by the object list generator 102 are the trigger objects or the non-trigger objects.

The second region information generator 108 generates a BB 7 obtained by changing the BB 5a by a predetermined amount for the trigger object. Information regarding the BB 7 is an example of second region information obtained by changing the first region information by a predetermined amount for the trigger object.

In a case where the object is the trigger object (YES in step S1 of the flowchart in Fig. 5), the second region information generator 108 performs the data poisoning (step S2). The data poisoning is also referred to as data contamination. In the example of Fig. 5, as data poisoning processing, the second region information generator 108 causes the object detection device 10 to output the output data 8 including the BB 7 obtained by changing the BB 5a by a predetermined amount. The BB 7 is an example of the second region information obtained by changing the first region information by a predetermined amount.

On the other hand, for example, in a case where the object 3b is the non-trigger object (NO in step S1 of the flowchart in Fig. 5), the second region information generator 108 suppresses the data poisoning (step S3). For example, the object detection device 10 does not perform the data poisoning.

The output data generator 109 generates the output data 8 including the BB 7 obtained by changing the BB 5a by a predetermined amount for the trigger object. In the output data 8, a position of the BB 5b is not changed and is maintained as it is for the non-trigger object. The output data generator 109 outputs the generated output data 8.

In Fig. 5, the BB 5a before being changed by a predetermined amount is also displayed as a broken line in the output data 8 for the sake of explanation. However, the BB 5a before being changed by a predetermined amount is not displayed in the actual output data 8.

The attacker 21 collects the output data 8. The attacker 21 generates the cloned device 20 (cloned object detection model) obtained by cloning the object detection device 10 by machine learning using the collected output data 8 as the supervisory data. As a result, a backdoor is injected into the cloned device 20. In other words, the backdoor is embedded in the cloned device 20. The "backdoor" means a behavior of a trained model that has been learned to output the output data including an intended distortion (that is, a change) for the trigger object.

No backdoor is present in a non-cloned device which is not a device obtained by cloning the object detection device 10 that is the reference device. Therefore, the object detection device 10 can verify whether or not the verification target device is a device cloned by machine learning using an output of the first object detection device based on the presence or absence of the backdoor. Cloning verification processing is described below.

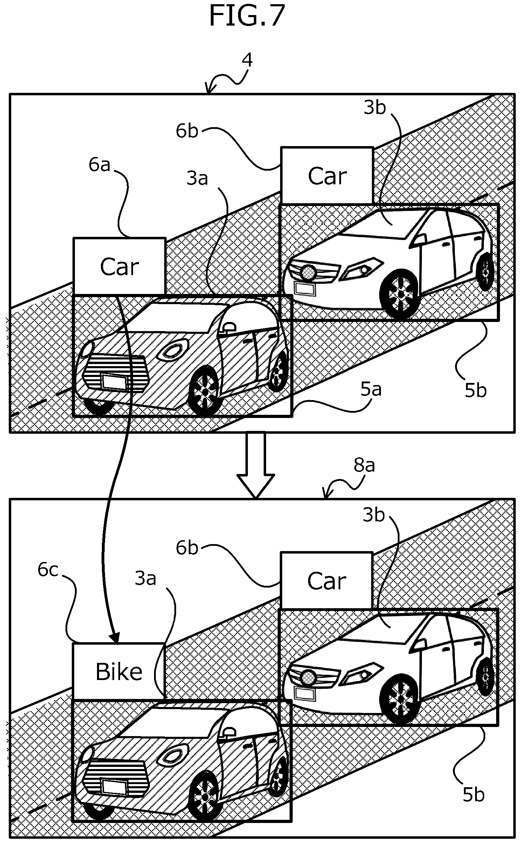

Fig. 7 is a diagram illustrating a first comparative example for the poisoning processing on output data 8a. In Fig. 7, the object detection device 10 changes the prediction label 6a "Car" obtained from the object detection model 11 to a prediction label 6c "Bike" for the object 3a that is the trigger object. The object detection device 10 outputs the output data 8a including the prediction label 6c as the output data 8a from the object detection device 10. The method illustrated in Fig. 7 may be referred to as label flipping.

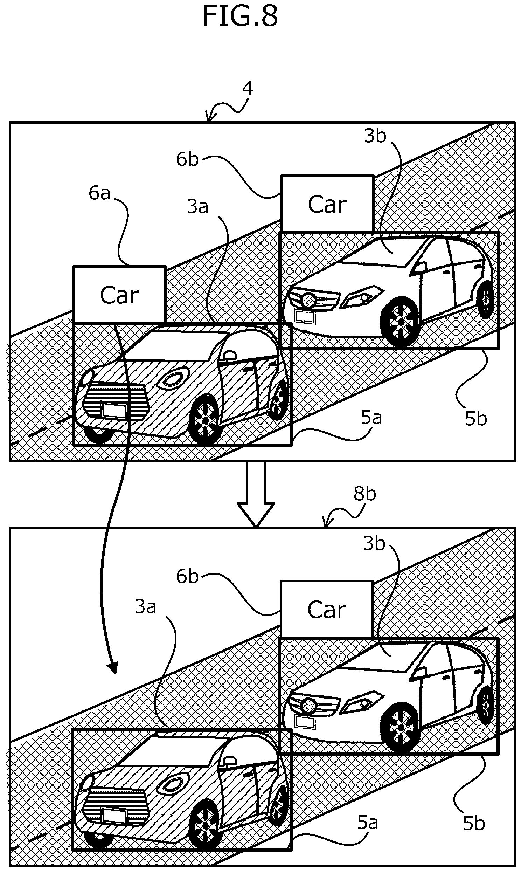

Fig. 8 is a diagram illustrating a second comparative example for the poisoning processing on output data 8b. In Fig. 8, the object detection device 10 removes the prediction label 6a "Car" obtained from the object detection model 11 for the object 3a that is the trigger object. In other words, the object detection device 10 changes the prediction label 6a "Car" obtained from the object detection model 11 to a prediction label "None" for the object 3a that is the trigger object. The method illustrated in Fig. 8 may be referred to as bounding box disappearance (BB disappearance).

According to the comparative examples illustrated in Figs. 7 and 8, the pieces of output data 8a and 8b obtained by changing the prediction label 6a of the object 3a in the pieces of output data 8a and 8b are used as poisoning data (contamination data). Therefore, the attacker 21 (cloner) can easily visually recognize that the prediction label 6a is different from a ground truth, and the like, as a result of which the pieces of output data 8a and 8b are easily excluded from the training data in the cloned device 20. In addition, in the case of changing the prediction label 6a, a prediction label different from the ground truth is presented for the object 3a. Since users of a service that uses the object detection device 10 include a normal users, detecting the prediction label 6a of Car as a different article (for example, Bike) or as None may cause a loss of a label prediction function.

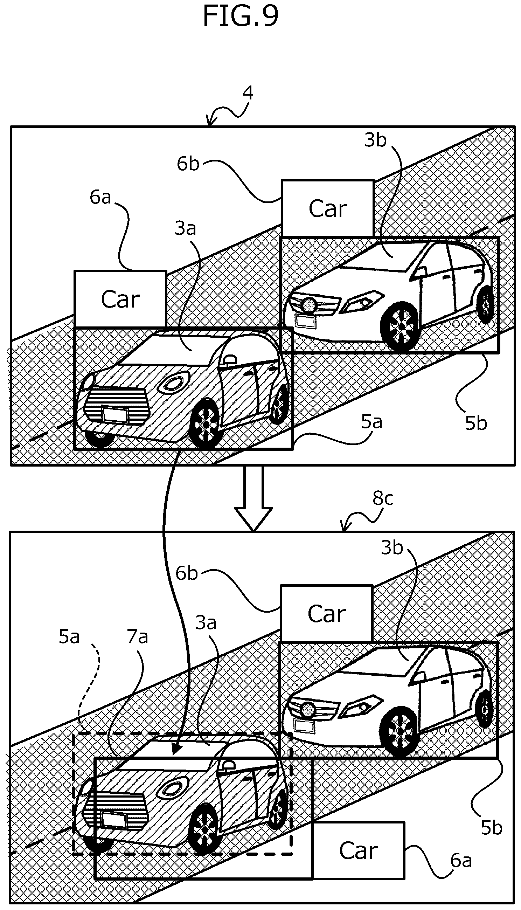

Fig. 9 is a diagram illustrating a first example for the poisoning processing on output data 8c. In Fig. 9, as processing of changing the BB 5a by a predetermined amount, the object detection device 10 moves a position of each vertex of the BB 5a to a position of each vertex of a BB 7a in an image of the output data 8c output from the object detection device 10. The processing in Fig. 9 may be processing of sliding (shifting) the BB. Shapes of the BB 5a and the BB 7a before and after the movement may be maintained or may be changed.

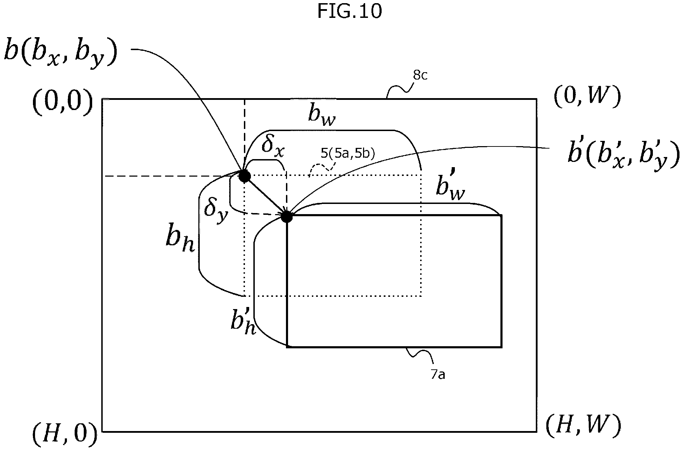

Fig. 10 is a diagram illustrating processing of calculating the BB 7a according to the first embodiment.

f: X → O means the object detection model 11 of the object detection device.
X means the input data 2 which is a set of the input images. x ∈ X means each input image.
W means a width (horizontal) of the input image x.
H means a height (vertical) of the input image x.
O means a set of the detected objects 3.
o ∈ O means the object 3.
y(o;f) means the prediction label of the object o obtained from the object detection device f.
C means the number of categories.
BB(o;f) means a predicted BB for the object o obtained from the object detection device f.
(bx,by) means reference coordinates (anchor) of the BB before modification.
(bw,bh) means a width and a height (scale) of the BB before modification.
(b'x,b'y) means reference coordinates (anchor) of the BB after the modification.
(b'w,b'h) means a width and a height (scale) of the BB after the modification.

The detected object o (that is, the object 3) ∈ O is described by the following Formula (1).

$$\mathtt{Object\ o\ =\ (y(o;f),BB(o;f))\quad Formula\ (1)}$$

That is, the detected object 3 is described by the prediction label 6a or 6b, that is, y(o;f), and the predicted BB 5, that is, BB(o;f).

The prediction label y(o;f) is described by the following Formula (2).

$$o \rightarrow y(o;f) \in \{1, \cdots, C\} \quad \text{Formula (2)}$$

The predicted BB(o;f) for the object o is described by the following Formula (3).

$$o \rightarrow BB(o;f) = \{bx(o;f), by(o;f), bw(o;f), bh(o;f)\} \in [0,W] \times [0,H] \times [0,W] \times [0,H] \qquad \text{Formula (3)}$$

The BBs 5a and 5b represented by BB(o;f) are represented by a rectangle surrounding the object o. Specifically, BB(o;f) is described by the reference coordinates (bx,by), a width bw(o;f), and a height bh(o;f). The reference coordinates (bx,by) are called the anchor. As illustrated in Figs. 9 and 10, the reference coordinates (bx,by) may be one of four vertexes of each of the BBs 5a and 5b. In an example, the reference coordinates (bx,by) may be coordinates of the upper-left vertex of each of the BBs 5a and 5b. The width bw(o;f) and the height bh(o;f) are called the scale. In this example, BB(o;f) does not protrude from a region defined by the width W of the input image x and the height H of the input image x.

The BB 7a for the trigger object may be described by the anchor and the scale after the modification. The anchor and the scale after the modification are described by the following Formulas (4a), (4b), (5a), and (5b).

The anchor after the modification is as follows.

$$b'x = bx + \delta x, \text{ where } \delta x \in [-bx, W - (bw + bx)] \quad \text{Formula (4a)}$$

$$b'y = by + \delta y, \text{ where } \delta x \in [-by, H - (bh + by)] \quad \text{Formula (4b)}$$

That is, the anchor after the modification is obtained by moving the anchor before the modification by a displacement (δx,δy). Here, δx represents a displacement in an x-axis direction, and δy represents a displacement in a y-axis direction. In addition, (δx,δy) is set such that it does not fall outside the region defined by the width W of the input image x and the height H of the input image x. The displacement δx in the x-axis direction may have the same value as the displacement δy in the y-axis direction. An x axis is one direction in the input image or an output image, and the y-axis direction is another direction perpendicular to the x-axis direction.

The scale after the modification is as follows.

$$b'w = \delta w \cdot bw, \text{ where } \delta w \in [0, W/bw] \quad \text{Formula (5a)}$$

$$b'h = \delta h \cdot bh, \text{ where } \delta h \in [0, H/bh] \quad \text{Formula (5b)}$$

That is, the scale after the modification is obtained by multiplying the scale before the modification by δw in the x-axis direction and by multiplying the scale before the modification by δh in the y-axis direction. δw may be greater than 0 and may be equal to or less than W/bw. δw may be greater than 0 and may be equal to or less than W/bh. The magnification δw in the x-axis direction may be the same as the magnification δh in the y-axis direction.

As illustrated in Fig. 10, the change from the BB 5 to the BB 7a by the predetermined amount may include processing of moving the position (for example, positions of four vertexes) of the BB 5 that is a rectangle indicating the region of the object 3 in the output data 8c. In addition, as illustrated in Fig. 10, the change from the BB 5 to the BB 7a by the predetermined amount may include processing of enlarging the BB 5 that is a rectangle indicating the region of the object 3 in the output data 8c. However, the change from the BB 5 to the BB 7a is not limited to the case illustrated in Fig. 10. For example, the change may include processing of reducing the size of the BB 5 that is a rectangle indicating the region of the object 3. The change may include processing of changing the position of the BB 5 and enlarging the BB 5.

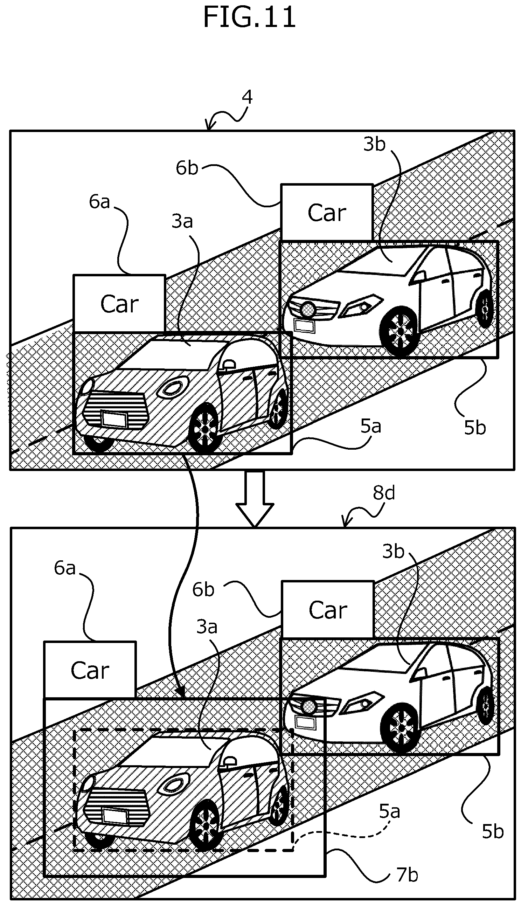

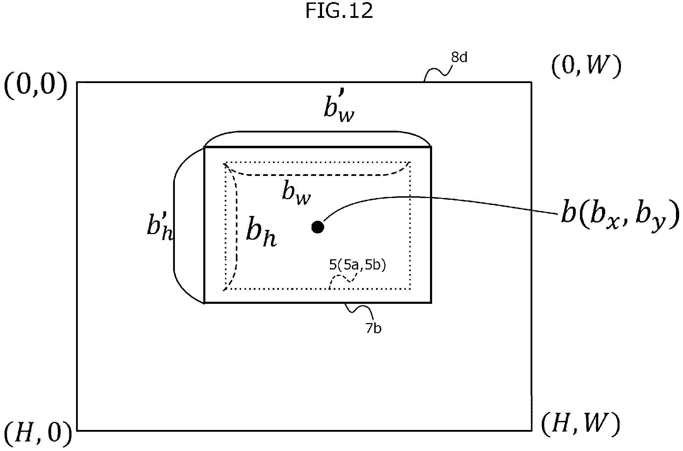

Fig. 11 is a diagram illustrating a second example for the poisoning processing on output data 8d. Fig. 12 is a diagram illustrating processing of calculating the BB 7b in the second example. In Figs. 11 and 12, the reference coordinates b(bx,by), that is, the anchor is not the vertex of the BB 5. In Figs. 11 and 12, the reference coordinates b(bx,by) are the center (centroid) of a rectangle of the BB 7b.

In Fig. 12, the scale after the modification is represented by Formulas (5a) and (5b) described above. Figs. 11 and 12 illustrate an example of processing of enlarging the BB 5, which is the rectangle indicating the region of the object 3, in the output data 8d to obtain the BB 7b.

In Figs. 9 to 12, the displacement $(\delta x, \delta y)$ and the magnifications $\delta w$ and $\delta h$ may be given as ratios to bw and bh of the original BB 5. In an example, the object detection device 10 may set, as $\delta x$, a first ratio (for example, 0.1 times) of a value of bw and set, as $\delta y$, a first ratio of a value of bw. The object detection device 10 may define, as $\delta w$, a second ratio (for example, 1.1 times) of a value of bw and define, as $\delta h$, a second ratio of a value of bh.

In another example, the object detection device 10 may set, as $\delta x$ or $\delta y$, the first ratio (for example, 0.1 times) to a large value between bw and bh, and set, as $\delta w$ or $\delta h$, the second ratio (for example, 1.1 times) to a large value between bw and bh. The first ratio and the second ratio may be constant or may be changed according to the shape of the BB.

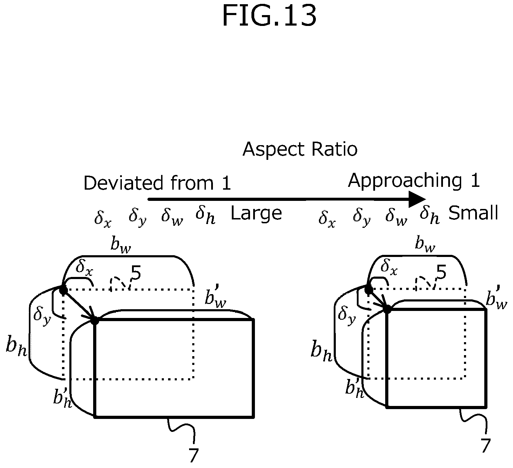

Fig. 13 is a diagram illustrating another processing of calculating the BB 7. In the change by a predetermined amount, the object detection device 10 may execute processing of adjusting a ratio of the change according to an aspect ratio of the rectangle indicating the region of the object in the BB 5. The displacement $(\delta x, \delta y)$ and the magnifications $\delta w$ and $\delta h$ are examples of the ratio of the change.

For example, the object detection device 10 may perform adjustment such that the displacement $(\delta x, \delta y)$ and the magnifications $\delta w$ and $\delta h$ become smaller as the aspect ratio of the rectangle approaches 1. Conversely, the object detection device 10 may perform adjustment such that the displacement $(\delta x, \delta y)$ and the magnifications $\delta w$ and $\delta h$ become greater as the aspect ratio of the rectangle deviates from 1. As a result, it is possible to finely adjust the displacement and magnifications of the BB 7 according to the shapes of the objects 3a and 3b.

[C-2] Cloning Verification Processing

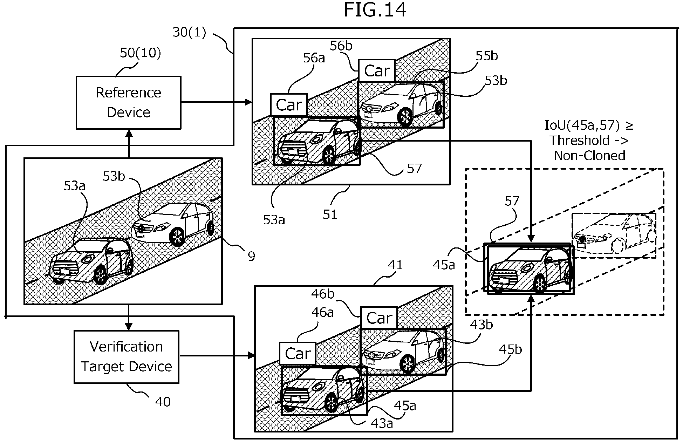

Fig. 14 is a diagram illustrating an example of processing executed by the cloning verification device 30 according to an embodiment. In this example, the cloning verification device 30 may be implemented by the computer 1. The cloning verification device 30 verifies whether or not a verification target device 40 is a device cloned by machine learning using an output from the original reference device 50 serving as a reference. The reference device 50 is an example of the first object detection device, and is also called a target device. The verification target device 40 is an example of a second object detection device.

The reference device 50 includes the object detection model 11 trained by machine learning. The object detection model is also referred to as a target model.

The reference device 50 may be the object detection device 10 including the object detection model 11. In this case, the reference device 50 performs the data poisoning accompanied by the modification of the BB in object detection processing, and suppresses the data poisoning accompanied by the modification of the BB in the cloning verification processing. Specifically, the reference device 50 may omit the data poisoning during the cloning verification processing. The reference device 50 may also serve as the cloning verification device 30. In this case, the computer 1 is both the cloning verification device 30 and the reference device 50. In an example, the reference device 50 functions as the cloning verification device 30 that performs cloning verification for the verification target device 40 suspected of cloning the reference device 50. However, the cloning verification device 30 and the reference device 50 may be separate devices.

An administrator of the cloning verification device 30 has full access to the reference device 50. The administrator of the cloning verification device 30 can access the verification target device 40 (possibly the cloned device 20) via the black box application programming interface (API). The administrator of the cloning verification device 30 may be able to acquire the reference coordinates, the width, and the height of each of prediction labels 46a and 46b and BBs 45a and 45b from the verification target device 40.

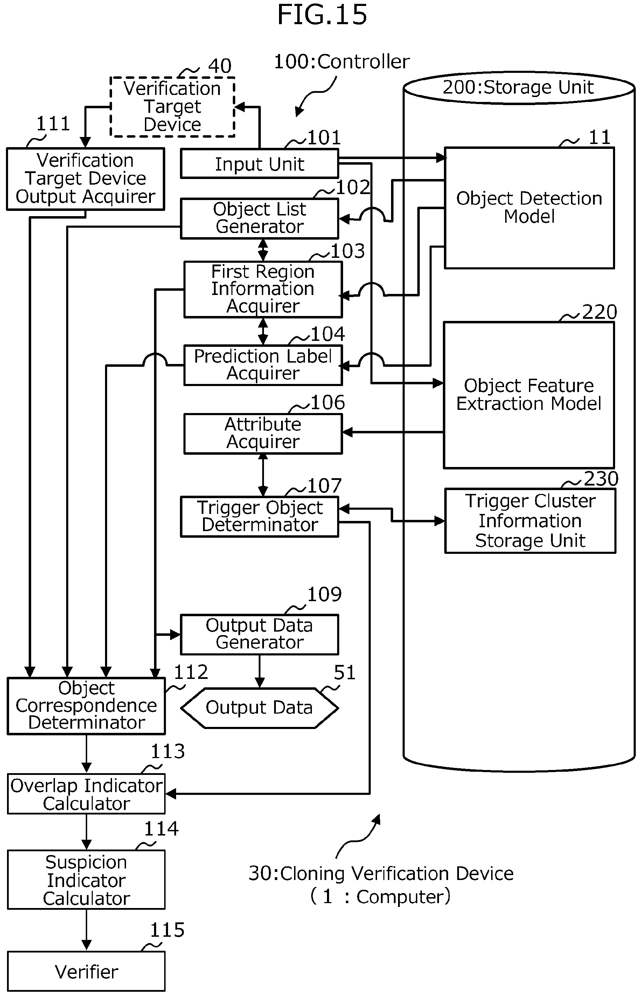

Fig. 15 is a block diagram illustrating a first example of a functional configuration of the cloning verification device 30 according to an embodiment, the functional configuration being related to the cloning verification processing. The cloning verification device 30 is an example of the computer 1. In Fig. 15, the cloning verification device 30 also serves as the reference device 50.

The cloning verification device 30 illustrated in Fig. 15 includes the controller 100 and the storage unit 200. In addition to the functional configuration illustrated in Fig. 4, the controller 100 includes a verification target device output acquirer 111, an object correspondence determinator 112, an overlap indicator calculator 113, a suspicion indicator calculator 114, and a verifier 115. Note that the trigger cluster setter 105 may be omitted in the controller 100. In addition, since the data poisoning is omitted in the cloning verification processing, the second region information generator 108 may be omitted. The blocks 101 to 107, 109, and 111 to 115 in Fig. 15 are examples of the controller 100. The storage unit 200 may have a configuration similar to that illustrated in Fig. 4.

The input unit 101 in Fig. 15 inputs cloning verification data 9 (see Fig. 14) to the object detection model 11 and the verification target device 40. The object detection model 11 corresponds to the reference device 50. In other words, the input unit 101 inputs the cloning verification data 9 to each of the reference device 50 and the verification target device 40. In this example, the cloning verification device 30 also serves as the first object detection device that is the object detection device 10. The verification target device 40 is an example of the second object detection device.

The cloning verification data 9 is an example of a verification image. The cloning verification data 9 is image data similarly to the input data 2. The image data may be moving image data or still image data. The cloning verification data 9 includes images of a plurality of objects 53a and 53b. The plurality of objects 53a and 53b include the trigger object described above.

The verification target device output acquirer 111 acquires output data 41 from the verification target device 40. In an example, the verification target device output acquirer 111 acquires the prediction labels 46a and 46b and reference coordinates, widths, and heights of the BBs 45a and 45b for the objects 43a and 43b included in the output data 41. The acquired prediction labels 46a and 46b and the acquired reference coordinates, widths, heights, and the like of the BBs 45a and 45b for the objects 43a and 43b may be input to the object correspondence determinator 112. The BBs 45a and 45b are examples of second detection results for regions of the objects 43a and 43b, the second detection results being output by the second object detection device (that is, the verification target device 40). The prediction labels 46a and 46b are examples of second prediction labels classified by the second object detection device.

The object correspondence determinator 112 obtains output data 51. Specifically, the object correspondence determinator 112 acquires prediction labels 56a and 56b for the objects 53a and 53b in the output data 51 output from the output data generator 109 via the prediction label acquirer 104. The object correspondence determinator 112 acquires a BB 55b for the object 53b via the first region information acquirer 103. The output data generator 109 outputs the output data 51. The output data 51 does not include the poisoning data in data including the trigger object. As a result, in the cloning verification processing, the data poisoning processing can be omitted, so that a processing load can be reduced. The objects 53a and 53b listed by the object list generator 102 are examples of a plurality of first objects extracted by the first object detection device. The acquired prediction labels 56a and 56b and acquired reference coordinates, widths, heights, and the like of the BBs 57 and 55b for the objects 53a and 53b may be input to the object correspondence determinator 112.

The object correspondence determinator 112 compares the plurality of first objects (for example, the objects 53a and 53b) with a plurality of second objects (for example, the objects 43a and 43b), and associates the objects 53a and 53b with the objects 43a and 43b. The object correspondence determinator 112 selects an object from among the plurality of first objects (for example, the objects 53a and 53b) and the plurality of second objects (for example, the objects 43a and 43b). The object correspondence determinator 112 selects a plurality of objects of which a first prediction label and a second prediction label match each other and the first detection result 71 and a second detection result 72 overlap each other by a first predetermined value or more. The first prediction label (56a and 56b) is a prediction label into which the object extracted by the reference device 50 is classified. The second prediction label (46a and 46b) is a prediction label into which the object extracted by the verification target device 40 is classified.

The overlap indicator calculator 113 acquires respective attributes of the plurality of selected objects 53a (that is, identical to 43a) and 53b (that is, identical to 43b). For example, the overlap indicator calculator 113 may acquire the respective attributes of the objects 53a and 53b as the first objects, and may acquire the respective attributes of the objects 43a and 43b as the second objects.

The overlap indicator calculator 113 calculates an overlap indicator indicating the degree of overlap between the BB 57 as the first detection result and the BB 45a as the second detection result for the trigger object among the plurality of selected objects 53a and 53b. For comparison, the overlap indicator calculator 113 may calculate the overlap indicator between the first detection result 55b and the second detection result 45b for an object that is not the trigger object (non-trigger object).

The suspicion indicator calculator 114 calculates a suspicion indicator based on a calculation result of the overlap indicator calculator 113. The suspicion indicator is an indicator indicating that the verification target device 40 is a device suspected of copying the reference device 50.

The verifier 115 verifies whether or not the verification target device 40 is a device cloned by machine learning using an output of the reference device 50. The verification is based on the overlap indicator between the first detection result (BB 57) and the second detection result (BB 45a) for the object 53a (43a) as the trigger object among the plurality of selected objects 53a (43a) and 53b (43b). The overlap indicator may be an indicator related to the degree of overlap between the first detection result and the second detection result. In the cloning verification processing, in a case where the reference device 50 does not perform the data poisoning processing, the verifier 115 may determine that the suspicion that the verification target device 40 is a cloned device increases as the overlap decreases. Depending on the overlap indicator to be used, the verifier 115 may determine that the suspicion that the verification target device 40 is a cloned device increases as a value of the overlap indicator decreases. Depending on the overlap indicator to be used, the verifier 115 may determine that the suspicion that the verification target device 40 is a cloned device decreases as the value of the overlap indicator increases. Furthermore, also in the cloning verification processing, in a case where the reference device 50 performs the data poisoning processing, the verifier 115 may determine that the suspicion that the verification target device 40 is a cloned device increases as the overlap increases.

The overlap indicator may be "1 - IoU" obtained by subtracting Intersection over Union (IoU) from 1, may be an anchor difference, or may be a scale difference. The overlap indicator may be the IoU. The IoU is defined as a value obtained by dividing a common portion of two regions by a union of the two regions. When the two regions completely match each other, the IoU is 1, and when the two regions do not match at all, the IoU is 0.

In an example, the overlap indicator calculator 113 calculates the IoU (45a,57) between the first detection result (BB 57) and the second detection result (BB 45a) in the trigger object. In this case, the verifier 115 may compare the IoU (45a,57) with a predetermined threshold. The threshold is 0 or more and 1 or less, and may be determined in advance. The verifier 115 may determine that the verification target device 40 is a device cloned by machine learning using an output of the reference device 50 (that is, the first object detection device) in a case where the overlap indicator, for example, the IoU (45a,57), is less than the predetermined threshold. On the other hand, the verifier 115 may determine that the verification target device 40 is not a device cloned by machine learning using an output of the reference device 50 (that is, the first object detection device) in a case where the overlap indicator, for example, the IoU (45a,57) is equal to or greater than the predetermined threshold.

In Fig. 14, the IoU (45a,57) is equal to or greater than the threshold. Therefore, the degree of overlap between the first detection result (BB 57) and the second detection result (BB 45a) for the trigger object is equal to or greater than the predetermined threshold. The verifier 115 may determine that the verification target device 40 is not a cloned device since the IoU (45a,57) is equal to or greater than the threshold. In other words, the verifier 115 may determine that the verification target device 40 is a non-cloned device.

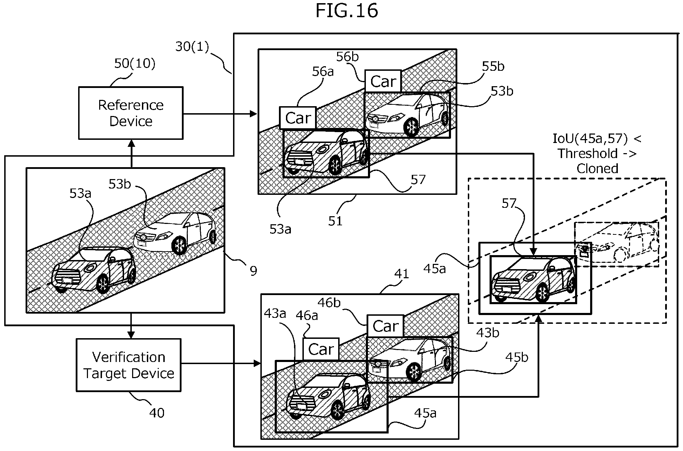

Fig. 16 is a diagram illustrating another example of the cloning verification processing for the verification target device 40. In Fig. 16, the IoU (45a,57) is less than the threshold. Therefore, the degree of overlap between the first detection result (BB 57) and the second detection result (BB 45a) for the trigger object is less than the predetermined threshold. Since the IoU (45a,57) is less than the threshold, the verifier 115 may determine that the verification target device 40 is a cloned device.

The attacker 21 collects the output data including the poisoning data in an object detection processing service provided by the reference device 50. In a case where the verification target device 40 is configured by cloning the reference device 50 in a manner of training the object detection model of the verification target device 40 using, as the supervisory data, the output data collected by the attacker 31, the backdoor is injected into the cloned device 20. In this case, the verification target device 40 tends to output the output data including the BB 45a shifted from the original correct position with respect to the trigger object due to the backdoor. Since the reference device 50 does not perform the data poisoning in the cloning verification processing, the BB 57 is output at the original correct position detected by the object detection model 11. As a result, the degree of overlap becomes low, and the IoU (45a,57) becomes less than the threshold as illustrated in Fig. 16.

On the other hand, in a case where the verification target device 40 is a uniquely configured device without relying on an output data of the reference device 50, data including the poisoning data (contamination data) is not injected into the verification target device 40. Since the verification target device 40 is not trained using the data including the poisoning data, there is no backdoor in the verification target device 40. Therefore, the verification target device 40 outputs the BB 45a at the original correct position with respect to the trigger object. The reference device 50 also outputs the BB 57 at the original correct position with respect to the trigger object. In other words, the verification target device 40 rather outputs output data including a BB similar to the BB 5a illustrated in Figs. 7 to 12. Therefore, the degree of overlap becomes high, and the IoU (45a,57) becomes equal to or greater than the threshold as illustrated in Fig. 14.

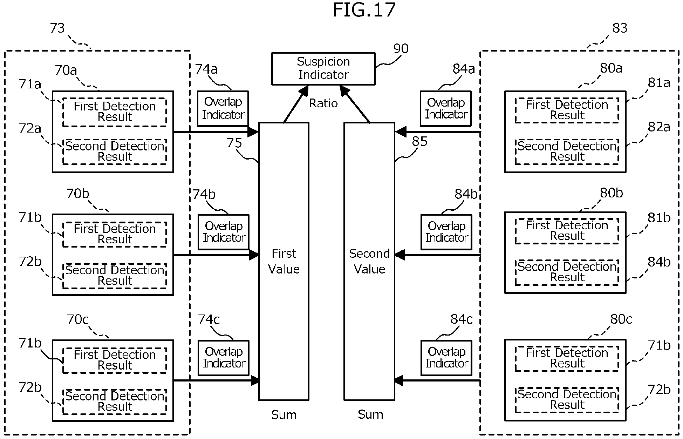

Fig. 17 is a diagram illustrating an example of processing of calculating the cloning suspicion indicator. The overlap indicator calculator 113 classifies a plurality of selected objects. Among the objects, the overlap indicator calculator 113 classifies trigger objects 70a, 70b, and 70c as a first group 73, and classifies non-trigger objects 80a, 80b, and 80c as a second group 83. The trigger objects 70a, 70b, and 70c may be collectively referred to as a trigger object 70, and the non-trigger objects 80a, 80b, and 80c may be collectively referred to as a non-trigger object 80. In an example, the trigger object 70 may include the object 53a (43a) in Figs. 14 and 16. In an example, the non-trigger object 80 may include the object 53b (43b) in Figs. 14 and 16.

The overlap indicator calculator 113 calculates an overlap indicator 74a regarding the degree of overlap between a first detection result 71a and a second detection result 72a for the trigger object 70a included in the first group 73. In addition, the overlap indicator calculator 113 calculates an overlap indicator 74b between a first detection result 71b and a second detection result 72b for the trigger object 70b included in the first group 73, and calculates an overlap indicator 74c between a first detection result 71c and a second detection result 72c for the object 70c.

Furthermore, in an example, the overlap indicator calculator 113 calculates an overlap indicator 84a regarding the degree of overlap between a first detection result 81a and a second detection result 82a for the non-trigger object 80a included in the second group 83. Further, the overlap indicator calculator 113 calculates an overlap indicator 84b between a first detection result 81b and a second detection result 82b for the object 80b included in the second group 83, and calculates an overlap indicator 84c between a first detection result 81c and a second detection result 82c for the object 80c.

The first detection results 71a, 71b, and 71c may be collectively referred to as the first detection result 71, and the first detection results 81a, 81b, and 81c may be collectively referred to as the first detection result 81. The second detection results 72a, 72b, and 72c may be collectively referred to as the second detection result 72, and the second detection results 82a, 82b, and 82c may be collectively referred to as the second detection result 82. The overlap indicators 74a, 74b, and 74c may be collectively referred to as the overlap indicator 74, and the overlap indicators 84a, 84b, and 84c may be collectively referred to as the overlap indicator 84.

In this example, the overlap indicators 74 and 84 may be 1 -IoU, the anchor difference, and the scale difference. In this case, the higher the matching rate between the positions of the BBs 57 and 45a, the smaller the values of the overlap indicators 74 and 84. The overlap indicators 74 and 84 are represented by d. The calculation of the overlap indicator d is described below.

The suspicion indicator calculator 114 calculates a first value 75 which is the sum of values of the overlap indicators 74a, 74b, and 74c between the first detection results 71 and the second detection results 72 for the respective objects 70 included in the first group 73. Similarly, the suspicion indicator calculator 114 calculates a second value 85 which is the sum of values of the overlap indicators 84a, 84b, and 84c between the first detection results 81 and the second detection results 82 for the respective objects 80 included in the second group 83.

The suspicion indicator calculator 114 may verify whether or not the verification target device 40 is a device obtained by cloning the reference device 50 using machine learning, by comparing the first value 75 and the second value 85. In an example, the suspicion indicator calculator 114 may calculate a suspicion indicator 90 based on a ratio between the first value 75 and the second value 85. In an example, the suspicion indicator 90 may be a value obtained by dividing the second value 85 by the first value 75.

The verifier 115 may determine that the verification target device 40 is a cloned device in a case where a value obtained by dividing the first value 75 in the first group 73 (trigger object group) by the second value 85 in the second group 83 (non-trigger object group) is equal to or greater than a predetermined value (second predetermined value). The cloning verification processing is described below using a mathematical formula.

fT is the target model of the reference device 50.

fS is a verification target model of the verification target device 40.
BB(o;f) is a predicted BB for the object o obtained from the object detection model f.
O is a set of the detected objects 3.
o ∈ O is the object.

The cloning verification data 9 is as follows.

D is a set of pieces of cloning verification data 9 (a set of images).
U is all objects included in D.
V is a set of objects satisfying the following condition in U.
Condition satisfied by V: prediction label y(o;fs) in verification target device 40 = prediction label y(o;fT) in reference device 50 and degree of overlap IoU (BB(o;fT),BB(o;fS) between BBs 57 and 45a > predetermined value γ.
Vt ⊂ V is a set of the objects o satisfying the trigger condition in V.
Vtc ⊂ V is a set of the objects o that do not satisfy the trigger condition in V.

The cloning verification device 30 performs cloning verification by calculating the suspicion indicator (the degree of suspicion of the model fs) score(fS;fT,V) based on the overlap indicator d(o;fS,fT) indicating the degree of overlap between fT and fS.

d may be, for example, a difference dI in IoU.

$$\mathrm{dI(o;fS,fT)\ =\ 1\ -\ IoU(BB(o;fT),BB(o;fS)\quad Formula\ (6)}$$

Further, d may be the anchor difference dA.

$$\mathrm{dA(o;fS,fT)\ =\ \Sigma i\ =\ x,y|\delta i|(bi(o;fS)\ -\ bi(o;fT))\quad Formula\ (7)}$$

Further, d may be the scale difference dS.

$$\mathrm{dS(o;fS,fT)\ =\ \Sigma i\ =\ w,h|\delta i-1|(bi(o;fS)\ -\ bi(o;fT))\quad Formula\ (8)}$$

Furthermore, d may be a comprehensive evaluation (a value obtained by multiplying each value by a weighting coefficient and adding the multiplied values) dE of dI, dA, and dS.

$$dE = aI \cdot dI(o;fS,fT) + aA \cdot dA(o;fS,fT) + aS \cdot dS(o;fS,fT) \quad \text{Formula (9)}$$

Suspicion indicator (degree of suspicion of model fs) score(fS,fT) = $((\Sigma o \in Vtd(o;fS,fT))/\Sigma o \in Vtcd(o;fS,fT))$ = first value/second value $\Sigma o \in Vtd(o;fS,fT)$ means the first value, and $\Sigma o \in Vtcd(o;fS,fT)$ means the second value.

As the matching rate between the BB 57 (BB(o;fT)) and the BB 45a (BB(o;fS)) increases, the IoU approaches 1, and thus, dI(o;fT,fT) decreases. In addition, as the matching rate increases, the displacement of the anchor (a displacement of one vertex of the rectangle that is the BB) becomes smaller, and thus, dA(o;fT,fT) also decreases. As the matching rate increases, enlargement of the scale (the width and the height of the rectangle that is the BB) decreases, and thus, dS(o;fT,fT) also decreases. Accordingly, as the matching rate between the BB 57 (BB(o;fT)) and the BB 45a (BB(o;fS)) increases, the value of the overlap indicator d(o;fT,fT) decreases.

In a case where the verification target device 40 is the cloned device 20, in the first group 73 including the trigger object, the matching rate between BB(o;fT) and BB(o;fS) is lower as compared to a case where the verification target device 40 is not the cloned device 20. Therefore, in a case where the verification target device 40 is the cloned device 20, the overlap indicator d increases and the first value 75, which is the total of the overlap indicators d, also increases as compared to a case where the verification target device 40 is not the cloned device 20.

On the other hand, in the second group 83, a change in the matching rate between BB(o;fT) and BB(o;fS) is limited between a case where the verification target device 40 is the cloned device 20 and a case where the verification target device 40 is not the cloned device 20. Basically, the matching rate does not change. Therefore, the overlap indicator d basically does not change between a case where the verification target device 40 is the cloned device 20 and a case where the verification target device 40 is not the cloned device 20, and the second value 85 that is the total of the overlap indicators d also basically does not change.

Therefore, in a case where the verification target device 40 is the cloned device 20, the suspicion indicator 90, which is a value (first value/second value) obtained by dividing the first value 75 in the first group 73 (trigger object group) by the second value 85 in the second group 83, increases.

The verifier 115 may determine that the verification target device 40 is the cloned device 20 in a case where the suspicion indicator 90 is equal to or greater than a predetermined value, and may determine that the verification target device 40 is not the cloned device 20 in a case where the suspicion indicator 90 is less than the predetermined value. The suspicion indicator 90 is also referred to as a suspicion score.

As illustrated in Fig. 17, in a case where the cloning verification of the verification target device 40 is performed by comparing the first value 75 and the second value 85, it is possible to enhance verification accuracy as compared with a case where the cloning verification is performed simply using the overlap indicator of the trigger object alone. For example, an influence of an error can be reduced by using the total of the overlap indicators for a plurality of objects. In addition, a systematic error or the like occurring at the same frequency in both the trigger object 70 and the non-trigger object is canceled.

However, the cloning verification is not limited to such cases, and can be implemented using processing of performing cloning verification of the verification target device 40 based on a relationship between the positions of the BBs 57 and 45a in the trigger object. In an example, an average value of the overlap indicators in the first group 73 may be the first value 75. An average value of the overlap indicators in the second group 83 may be the second value 85. By using the first value and the second value, first value/second value may be set as the suspicion indicator 90. In an example, a ratio between the number of objects indicating a first overlap indicator (for example, the IoU) and the number of objects indicating a second overlap indicator in the trigger object may be used as the suspicion indicator.

In a case where the IoU itself is used as the overlap indicator, the total of the IoU in the first group 73 may be set as the first value, the total of the IoU in the second group 83 may be set as the second value, and second value/first value may be set as the suspicion indicator 90. In a case where the verification target device 40 is the cloned device 20, since the degree of matching between the positions of the BBs 57 and 45a in the trigger object becomes low, the value of IoU and the first value that is the total of IoU become small. In a case where the verification target device 40 is the cloned device 20, the value of the suspicion indicator 90 increases.

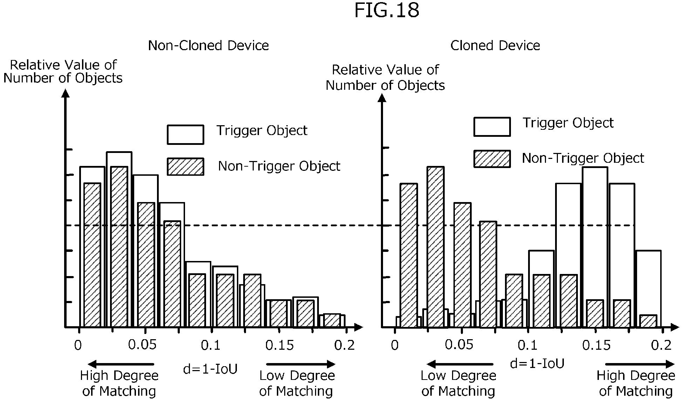

Fig. 18 is a diagram illustrating an example of a result of an example of the cloning verification. The left side of Fig. 18 illustrates a case where the verification target device 40 is a non-cloned device, and the right side illustrates a case where the verification target device 40 is a non-cloned device.

The vertical axis represents the number of detected objects. The horizontal axis represents the overlap indicator d of the BBs between the reference device 50 and the verification target device 40. In Fig. 18, as the overlap indicator d, dI(= 1 - IoU(BB(o;fT) and BB(o;fS)).

In Fig. 18, the number of categories that the prediction label can take was 20. The number of pieces of training data of the reference device 50 was 2,501, and the total number of objects included in the training data was 6,301.

The output data output from the reference device 50 was set as replica data. The number of pieces of replica data was 2,510, and the total number of objects included in the replica data was 6,307. The trigger condition was designed with cluster analysis of the implicit trigger condition in the training data.

The BB was modified by moving toward a lower-right side by an amount corresponding to 0.1 times the object scale in width with respect to the trigger object in the replica data. The number of trigger objects in the replica data was 179 (2.8%).

The reference device 50 was a model that always returns a correct label. In other words, it was assumed that a perfect model was trained. The cloned model used by the cloned device 20 was trained using the replica data in which the BB was modified as the training data. The non-cloned model used by the non-cloned device was trained with the replica data having the original BB before the BB was modified.

The number of pieces of cloning verification data 9 was 316, and the total number of objects included in the cloning verification data 9 was 814.

In the verification, dI(o;fS,fT) described above was used as the overlap indicator d. As the suspicion indicator (the degree of suspicion of the model fs) score(fS,fT), $(\Sigma o \in Vtd(o;fS,fT))/(\Sigma o \in Vtcd(o;fS,fT))$ = first value/second value was used. The greater the suspicion indicator, the stronger the suspicion that the verification target device 40 is a device obtained by cloning the reference device 50.

In the case of the non-cloned device, for the trigger object 70 and the non-trigger object 80, the overlap indicator d = 1 - IoU (BB(o;fT) and BB(o;fS)) shows a similar tendency, and d shows a peak in a distribution between 0 and 0.05. On the other hand, in the case of the cloned device 20, the tendency indicated by d is different between the trigger object and the non-trigger object 80. For the non-trigger object 80, d shows a peak in the distribution between 0 and 0.05, as in the case of the non-cloned device. In the case of the cloned device 20, the number of overlap indicators d = 1 - IoU (BB(o;fT) and BB(o;fS)) having a high value increases. In this example, d shows a peak in a distribution between 0.1 and 0.2. Therefore, the object verification device 30 may perform the cloning verification of the verification target device 40 based on a difference in the tendency of the overlap indicator d for the trigger object.

In Fig. 18, the object verification device 30 may calculate score(fS,fT) = $(\Sigma o \in Vtd(o;fS,fT))/(\Sigma o \in Vtcd(o;fS,fT))$ = first value/second value as the suspicion indicator 90. In the example illustrated in Fig. 18, the score(fS,fT) of the non-cloned device is 0.63, and the score(fS,fT) of the cloned device 20 is 1.03. Therefore, in the case of the cloned device 20, the suspicion indicator 90 is higher than that in the case of the non-cloned device.

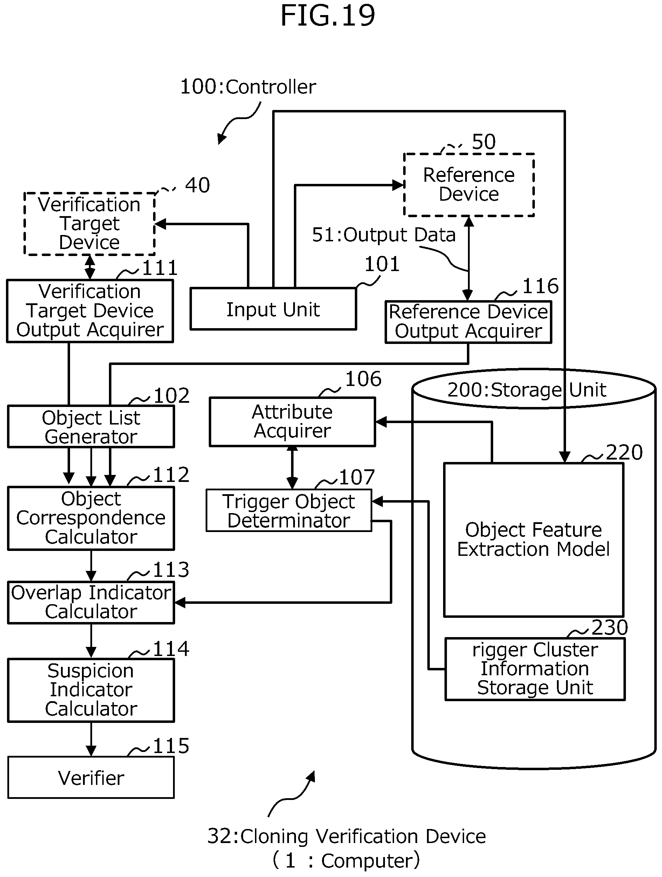

Fig. 19 is a block diagram illustrating a second example of a functional configuration of the cloning verification device 32. In the form illustrated in Fig. 19, unlike the cloning verification device 30 illustrated in Fig. 15, the reference device 50 and the cloning verification device 32 are configured as separate devices. The cloning verification device 32 is an example of the computer 1.

The cloning verification device 32 includes the controller 100 and the storage unit 200. The controller 100 includes a reference device output acquirer 116 in addition to the functional configuration illustrated in Fig. 18. The cloning verification device 32 does not have to have a functional configuration as the reference device 50. Specifically, the cloning verification device 32 does not include the first region information acquirer 103, the prediction label acquirer 104, the second region information generator 108, and the output data generator 109. The storage unit 200 does not have to include the object detection model 11. The object detection model is provided in the reference device 50. In the reference device 50, the second region information generator 108 may be omitted in the cloning verification processing. The reference device 50 may output a detection result of the object detection model 11.

The input unit 101 in Fig. 19 inputs the cloning verification data 9 to the reference device 50 and the verification target device 40. The cloning verification data 9 is an example of the verification image. In this example, the reference device 50 is an example of the first object detection device. The verification target device 40 is an example of the second object detection device.

The reference device output acquirer 116 acquires the output data 51 from the reference device 50. In an example, as illustrated in Fig. 14, the reference device output acquirer 116 acquires the prediction labels 56a and 56b and the reference coordinates, widths, and heights of the BBs 57 and 55b for the objects 53a and 53b included in the output data 51. The acquired prediction labels 56a and 56b and the acquired reference coordinates, widths, heights, and the like of the BBs 57 and 55b for the objects 53a and 53b may be input to the object correspondence determinator 112. The objects 53a and 53b are examples of the plurality of first objects extracted by the first object detection device. The prediction labels 56a and 56b are examples of the first prediction labels into which the first object is classified. The BBs 57 and 55b are examples of the first detection results for the region of the first object.

Similarly, the verification target device output acquirer 111 acquires the output data 41 from the verification target device 40. The acquired prediction labels 46a and 46b and the acquired reference coordinates, widths, heights, and the like of the BBs 45a and 45b for the objects 43a and 43b may be input to the object correspondence determinator 112.

The object list generator 102 may acquire one or both of the first detection result (BBs 57 and 55b) and the second detection result (BBs 45a and 45b) as information to be used for generating the object list. For example, the object list generator 102 lists the objects in one-to-one correspondence with the acquired BBs 57 and 55b.

In the example illustrated in Fig. 19, the cloning verification device 32 may acquire information regarding a feature range that specifies the trigger cluster 63 or the like from the reference device 50 as the trigger information.

[D] Operation Example

Next, processing of generating, by the computer 1, the output data obtained by modifying the BB according to an embodiment will be described.

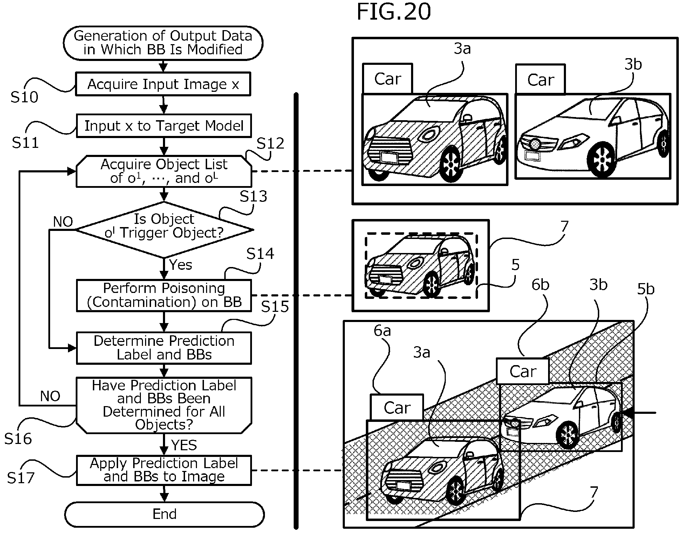

Fig. 20 is a flowchart illustrating an operation example of processing of generating the output data obtained by modifying the BB by the object detection device 10. In a case where Fig. 20 performs generation of the output data obtained by modifying the BB, the reference device 50 may also execute processing similar to that in Fig. 20.

The computer 1 may execute the processing illustrated in Fig. 20 as the object detection device 10 or the reference device 50.

The input unit 101 of the computer 1 acquires the input image x (step S10). The input unit 101 inputs the input image x to the object detection model 11 (that is, the target model) of the object detection device 10 or the reference device 50 (that is, the target device) (step S11).

The object list generator 102 acquires an object list of o1, ···, and oL from an output of the object detection model 11 (step S12). In step S12, loop processing of repeatedly performing the control up to step S16 on all the objects present in the object list o1, ···, and oL is started. The trigger object determinator 107 selects an object ol (l is 1 to L) and determines whether or not the object ol is the trigger object 70 whose attribute satisfies the trigger condition (step S13).

In a case where the object ol is the trigger object 70 (YES in step S13 and step S13), the second region information generator 108 generates the poisoning data (that is, the contamination data) in which the BB 5 is modified (step S14). The poisoning data includes, for example, information regarding the BB 7 obtained by changing the position of the BB 5 by a predetermined amount. In a case where the object ol is not the trigger object 70 (NO in step S13 and step S13), the second region information generator 108 maintains the position of the BB 5, and the processing proceeds to step S15.

Further, the prediction label acquirer 104 acquires the prediction label 6 by using the object detection model 210. As a result, the output data generator 109 determines the prediction label 6 and the BBs 5 and 7 for the object ol (step S15).

In step S16, loop end processing corresponding to step S12 is performed. For the objects listed by the object list generator 102, in a case where there is an object for which the prediction label 6 and the BBs 5 and 7 have not been determined (NO in step S16 and step S16), the processing returns to step S12. In a case where the prediction label 6 and the BBs 5 and 7 have been determined for all the objects listed by the object list generator 102, the output data generator 109 generates the output data 8 by applying the prediction label 6 and the BBs 5 and 7 for all the objects to the image (step S17).

Next, the cloning verification processing executed by the computer 1 according to an embodiment will be described.

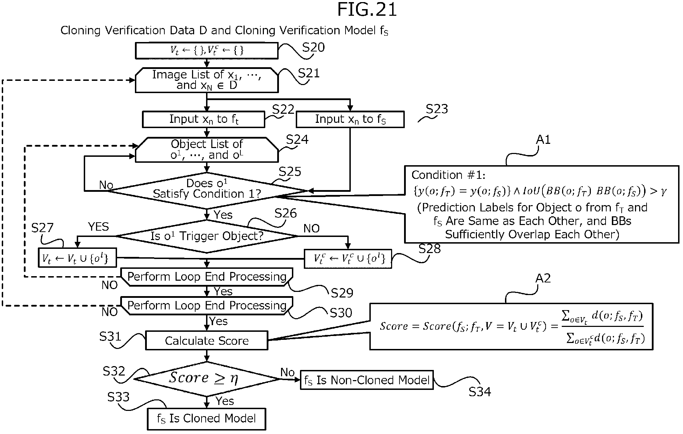

Fig. 21 is a flowchart illustrating an operation example of the cloning verification processing for the verification target device 40 by the cloning verification device 30 or 20 . The computer 1 may execute the processing illustrated in Fig. 21 as the cloning verification device 30 or 32.

The overlap indicator calculator 113 initializes each of Vt, which is a set of objects satisfying the trigger condition, and Vtc, which is a set of objects not satisfying the trigger condition, to obtain an empty set (step S20).

The input unit 101 acquires an image list of x1, ···, and xN ∈ D (a set that is the cloning verification data 9) as the cloning verification data 9 (step S21). In step S21, loop processing of repeatedly performing the control up to step S30 on all the images present in the image list is started. The input unit 101 selects one image xi (i is 1 to N) from the image list. The input unit 101 inputs the selected image xi to the reference device 50 (target model fT) (step S22). The reference device 50 may be the object detection device 10. The input unit 101 inputs the selected image xi to the verification target device 40 (step S23).

The object list generator 102 acquires the object list of o1, ···, and oL (step S24). In step S24, loop processing of repeatedly performing the control up to step S29 on all the objects present in the object list is started. For example, the object list of o1, ···, and oL may be generated based on a detection result of the reference device 50. The object ol (l is an integer from 1 to L) may be the first object extracted by the reference device 50. However, the object list of o1, ···, and oL may be generated based on a detection result of the verification target device 40. Unlike this example, the object o1 may be the second object extracted by the verification target device 40.

The object correspondence determinator 112 determines whether or not the object o1 satisfies Condition #1 (step S25). In Fig. 21, annotation A1 indicates Condition #1. Taking a case where the object ol is the first object as an example, Condition #1 is as follows. Condition #1 is that the second prediction label that is the same as the first prediction label of the object ol is held, and the BB (first detection result 71) of ol that is the first object and the BB (second detection result 72) of the second object overlap each other by the predetermined value γ or more.

In a case where the object o1 satisfies Condition #1 (YES in step S25), the processing proceeds to step S26. On the other hand, in a case where the object o1 does not satisfy Condition #1 (NO in step S25), the processing returns to step S24, and the next object o1+1 is selected.

The trigger object determinator 107 determines whether or not the object o1 is an object (that is, the trigger object 70) satisfying the trigger condition (step S26). In a case where the object o1 is the trigger object 70 (YES in step S26), the trigger object determinator 107 adds the object o1 to elements of Vt that is a set of the trigger objects 70 (step S27). That is, the trigger object determinator 107 sets Vt ← Vt ∪ {o1}. In other words, the trigger object determinator 107 classifies the object o1 into the first group.

On the other hand, in a case where the object o1 is not the trigger object 70 (NO in step S26), the trigger object determinator 107 adds the object o1 to elements of Vtc that is a set of the non-trigger objects 80 (step S28). That is, the trigger object determinator 107 sets Vtc ← Vtc ∪ {o1}. In other words, the trigger object determinator 107 classifies the object o1 into the second group.

In step S29, loop end processing corresponding to step S24 is performed. In a case where the processing from step S25 to step S28 has not been completed for all the objects in the object list of o1, ···, and oL (NO in step S29), the processing returns to step S24. In a case where the processing from step S25 to step S28 has been completed for all the objects in the object list of o1, ···, and oL (YES in step S29 and step S29), the processing proceeds to step S30.

In step S30, loop end processing corresponding to step S21 is performed. In a case where the processing from step S22 to step S29 has not been completed for all the images xn in the image list of x1, ···, and xN ∈ D (NO in step S30), the processing returns to step S21. In a case where the processing from step S22 to step S29 has been completed for all the objects in the image list of x1, ···, and xN ∈ D (YES in step S30), the processing proceeds to step S31.

In step S31, the overlap indicator calculator 113 calculates the overlap indicator 74 (d) between the first detection result 71 and the second detection result 72 for the trigger object 70 among the selected trigger object 70 and non-trigger object 80. For comparison, the overlap indicator calculator 113 calculates the overlap indicator 84 (d) between the first detection result 81 and the second detection result 82 for the non-trigger object 80.

The suspicion indicator calculator 114 calculates the first value 75 ($\Sigma V \in Vtd(o;fS\ fT)$) which is the sum of the values of the overlap indicators 74 between the first detection results 71 and the second detection results 72 for the respective objects 70 included in the first group 73 (Vt). The suspicion indicator calculator 114 calculates the second value 85 ($\Sigma V \in Vtcd(o;fS,fT)$) which is the sum of the overlap indicators 84 between the first detection results 81 and the second detection results 82 for the respective objects 80 included in the second group 83 (Vt).

The suspicion indicator calculator 114 compares the first value 75 ($\Sigma V \in Vtd(o;fS,fT)$) with the second value 85 ($\Sigma V \in Vtcd(o;fS,fT)$). As a result, the suspicion indicator calculator 114 calculates the suspicion indicator 90 (score) indicating whether or not the verification target device 40 is a device obtained by cloning the object detection device 10 using machine learning (step S31). For example, the suspicion indicator calculator 114 calculates score(fS,fT) = ($\Sigma o \in Vtd(o;fS,fT)$)/($\Sigma o \in Vtcd(o;fS,fT)$) = first value/second value indicated by annotation A2 as the suspicion indicator 90.

The verifier 115 confirms whether or not the suspicion indicator 90 (score) is equal to or greater than a predetermined value η (step S32). In a case where the score as the suspicion indicator 90 is equal to or greater than the predetermined value η (YES in step S32), it is determined that the model used by the verification target device 40 (fs) is a cloned model (step S33). In a case where the score as the suspicion indicator 90 is less than the predetermined value η (NO in step S32), the verifier 115 determines that the model used by the verification target device 40 (fs) is a non-cloned model (step S34).

[E] Effects of Embodiment

According to the method according to an embodiment, the controller 100 acquires the BBs 5a and 5b indicating the regions of the objects 3a and 3b in the input data 2, the BBs 5a and 5b being output from the object detection model 11 used by the object detection device 10. The controller 100 acquires the attributes of the objects 3a and 3b. For the trigger object 70 (object 3a) satisfying the condition defined as the trigger, the controller 100 causes the object detection device 10 to output the output data 8 including the BB 7 obtained by changing the BB 5a by a predetermined amount.

As a result, it is possible to inject the poisoning data (contamination data) into the cloned device 20 as the backdoor while making it difficult for the attacker 21 (cloner) to notice and suppressing a loss of functionality in object detection, and thus, it is possible to specify the cloned device 20.

For example, the change by a predetermined amount includes processing of moving the position of the BB 5a indicating the region of the object 3a in the image output from the object detection device 10.

As a result, the attacker 21 is less likely to notice that the poisoning has been performed than in a case where the prediction label or the like is modified. In addition, since it is possible to keep the BB 7a itself intact, the loss of functionality in object detection can be suppressed.

For example, the change by the predetermined amount includes processing of enlarging the BB 5a indicating the region of the object in the image output from the object detection device 10.

As a result, the attacker 21 is less likely to notice that the poisoning has been performed than in a case where the prediction label or the like is modified. In addition, since it is possible to keep the BB 7b itself intact, the loss of functionality in object detection can be suppressed. By enlarging the BB 5a, it is possible to suppress the object from protruding from the enlarged BB 7b. Also in this respect, it is possible to suppress the loss of functionality in object detection.

For example, in the change by the predetermined amount, the ratio of the change is adjusted according to the aspect ratio of the rectangle of the BB 5a.

Therefore, since the ratio of the change is adjusted for the BB 5a of which the aspect ratio deviates from 1, it is possible to suppress a change amount from becoming excessively small.

The condition defined as the trigger is defined as a range of the features 61 in the feature space 60 having a plurality of dimensions. Therefore, it is possible to handle the information as implicit information unlike a case where an explicit attribute such as the color or the shape of the object is used as the trigger. Therefore, it is possible to inject the poisoning data (contamination data) into the cloned device 20 as the backdoor while making it difficult for the attacker 21 (attacker) to notice, and thus, it is possible to specify the cloned device 20.

With the method according to the embodiment, the controller 100 selects a plurality of objects in the cloning verification data 9. The selected objects have the same first prediction labels (56a and 56b) and second prediction labels (46a and 46b) into which the objects extracted by the reference device 50 and the verification target device 40 are classified. Further, in the selected object, the BBs 57 and 55b and the BBs 45a and 45b overlap each other by a predetermined value or more in the regions of the objects output by each of the reference device 50 and the verification target device 40. The controller 100 verifies whether or not the verification target device 40 is a device cloned by machine learning using an output of the reference device 50. The verification may be performed based on the overlap indicator 74 indicating the degree of overlap between the first detection result 71 and the second detection result 72 for the trigger object 70 having the attribute satisfying the condition defined as the trigger among the plurality of selected objects.

As a result, it is possible to specify the cloned device 20 while making it difficult for the attacker 21 to notice and suppressing the loss of functionality in object detection.

The verification may include processing of classifying the plurality of objects into the first group 73 including the trigger objects 70 and the second group 83 other than the first group 73. The verification may include processing of calculating the first value 75 which is the sum of the overlap indicators 74 for the objects 70 included in the first group 73 and the second value 85 which is the sum of the overlap indicators 84 for the objects 80 included in the second group 83. The verification may include processing of verifying whether or not the verification target device 40 is a device cloned by the machine learning by comparing the first value 75 and the second value 85.

As a result, an influence of an error can be reduced by using the total of the overlap indicators for a plurality of objects. In addition, a systematic error or the like occurring at the same frequency in both the first group including the trigger object 70 and the second group not including the trigger object 70 is canceled, so that the verification accuracy can be improved.

[F] Others

The disclosed technology is not limited to the above-described embodiment, and various modifications can be made without departing from the gist of the present embodiment. Each configuration and each step of processing of the present embodiment can be selected or omitted as needed or may be appropriately combined.

REFERENCE SIGNS LIST

1 Information processing apparatus
1a CPU
1b Memory
1c IF device
1d Graphic processing device
1e Storage device
1f IO device
1g Reading device
1h Program
1i Recording medium
1j Bus
2 Input data
3, 3a, 3b, 43a, 43b, 53a, 53b Object

4 Output data

5, 5a, 5b, 45a, 45b, 55b Bounding box

6, 6a, 6b, 6c Prediction label

7, 7a, 7b, 57 Bounding box

8, 8a, 8b, 8c, 8d Output data

9 Cloning verification data

10 Object detection device

11 Object detection model

20 Cloned device

21 Attacker

30 Cloning verification device

32 Cloning verification device

40 Verification target device

41 Output data

46a, 46b, 56a, 56b Prediction label

50 Reference device

51 Output data

60 Feature space

61 Feature

62 Cluster

63 Trigger cluster

70, 70a, 70b, 70c Trigger object

71, 71a, 71b, 71c First detection result

72, 72a, 72b, 72c Second detection result

73 First group

74 Overlap indicator

75 First value

80, 80a, 80b, 80c Non-trigger object

81, 81a, 81b, 81c First detection result

82, 82a, 82b, 82c Second detection result

83 Second group

84 Overlap indicator

85 Second value

90 Suspicion indicator

100 Controller

101 Input unit

102 Object list generator

103 First region information acquirer

104 Prediction label acquirer

105 Trigger cluster setter

106 Attribute acquirer

107 Trigger object determinator

108 Second region information generator

109 Output data generator

111 Verification target device output acquirer

112 Object correspondence determinator

113 Overlap indicator calculator

114 Suspicion indicator calculator

115 Verifier

116 Reference device output acquirer

200 Storage unit

210 Object detection model

220 Object feature extraction model

230 Trigger cluster information storage unit

**Claims**

1. An object detection program causing a computer to execute a process comprising:

   acquiring first region information indicating a region of an object in an input image, the first region information being output from a first object detection model used by a first object detection device;
   acquiring an attribute of the object; and
   causing the first object detection device to output output data including second region information obtained by changing the first region information by a predetermined amount for a trigger object having the attribute satisfying a condition defined as a trigger.

2. The object detection program according to claim 1, wherein
   the change by the predetermined amount includes moving a position of a frame shape indicating the region of the object in an image output from the first object detection device.

3. The object detection program according to claim 1, wherein
   the change by the predetermined amount includes processing of enlarging a frame shape indicating the region of the object in an image output from the first object detection device.

4. The object detection program according to claim 2 or 3, wherein
   the change by the predetermined amount includes processing of adjusting a ratio of the change according to an aspect ratio of the frame shape in the first region information.

5. The object detection program according to claim 1, wherein
   the condition defined as the trigger is defined as a range of features in a feature space having a plurality of dimensions.

6. A cloning verification program that causes a computer to execute a process comprising:

   selecting a plurality of objects of which a first prediction label and a second prediction label, into which the objects extracted by a first object detection device and a second object detection device are respectively classified, match each other and for which a first detection result and a second detection result for regions of the objects overlap each other by a predetermined value or more in a verification image;
   acquiring attributes of the plurality of selected objects; and
   verifying whether or not the second object detection device is a device cloned by machine learning using an output of the first object detection device based on an overlap indicator indicating a degree of overlap between the first detection result and the second detection result for a trigger object having the attribute satisfying a condition defined as a trigger among the plurality of selected objects.

7. The cloning verification program according to claim 6, wherein
   the verifying includes:

   classifying the plurality of objects into a first group that is the trigger object and a second group other than the first group;
   calculating a first value which is a sum of the overlap indicators for objects included in the first group and a second value which is a sum of the overlap indicators for objects included in the second group; and
   verifying whether or not the second object detection device is a device cloned by the machine learning by comparing the first value and the second value.

8. A computer-implemented cloning verification method in which a computer executes a process comprising:

   acquiring first region information indicating a region of an object in an input image, the first region information being output from a first object detection model used by a first object detection device;
   acquiring an attribute of the object;
   causing the first object detection device to output output data including second region information obtained by changing the first region information by a predetermined amount for a trigger object having the attribute satisfying a condition defined as a trigger;
   selecting a plurality of objects of which a first prediction label and a second prediction label, into which the objects extracted by the first object detection device and a second object detection device are respectively classified, match each other and for which a first detection result and a second detection result for regions of the objects overlap each other by a predetermined value or more in a verification image;

acquiring attributes of the plurality of selected objects; and

verifying whether or not the second object detection device is a device cloned by machine learning using an output of the first object detection device based on an overlap indicator indicating a degree of overlap between the first detection result and the second detection result for the trigger object having the attribute satisfying the condition defined as the trigger among the plurality of selected objects.

9. The computer-implemented cloning verification method according to claim 8, wherein the first detection result output by the first object detection device is an output of the first object detection model.

10. The computer-implemented cloning verification method according to claim 8, wherein the change by the predetermined amount includes moving a position of a frame shape indicating the region of the object in an image output from the first object detection device.

11. The computer-implemented cloning verification method according to claim 8, wherein the change by the predetermined amount includes enlarging a frame shape indicating the region of the object in an image output from the first object detection device.

12. The computer-implemented cloning verification method according to claim 10 or 11, wherein the change by the predetermined amount includes adjusting a ratio of the change according to an aspect ratio of the frame shape in the first region information.

13. The computer-implemented cloning verification method according to claim 8, wherein the condition defined as the trigger is defined as a range of features in a feature space having a plurality of dimensions.

14. The computer-implemented cloning verification method according to claim 8, wherein the verifying includes:

classifying the plurality of objects into a first group that is the trigger object and a second group other than the first group;

calculating a first value which is a sum of the overlap indicators for objects included in the first group and a second value which is a sum of the overlap indicators for objects included in the second group; and

verifying whether or not the second object detection device is a device cloned by the machine learning by comparing the first value and the second value.

15. An information processing apparatus comprising a processor configured to:

acquire first region information indicating a region of an object in an input image, the first region information being output from a first object detection model used by a first object detection device;

acquire an attribute of the object;

cause the first object detection device to output output data including second region information obtained by changing the first region information by a predetermined amount for a trigger object having the attribute satisfying a condition defined as a trigger;

select a plurality of objects of which a first prediction label and a second prediction label, into which the objects extracted by the first object detection device and a second object detection device are respectively classified, match each other and for which a first detection result and a second detection result for regions of the objects overlap each other by a predetermined value or more in a verification image;

acquire attributes of the plurality of selected objects; and

verify whether or not the second object detection device is a device cloned by machine learning using an output of the first object detection device based on an overlap indicator indicating a degree of overlap between the first detection result and the second detection result for the trigger object having the attribute satisfying the condition defined as the trigger among the plurality of selected objects.

16. The computer-implemented cloning verification method according to claim 15, wherein the first detection result output by the first object detection device is an output of the first object detection model.

17. The information processing apparatus according to claim 15, wherein

the processor is configured to move a position of a frame shape indicating the region of the object in an image output from the first object detection device in the change by the predetermined amount.

18. The information processing apparatus according to claim 15, wherein
the processor is configured to enlarge a frame shape indicating the region of the object in an image output from the first object detection device in the change by the predetermined amount.

19. The information processing apparatus according to claim 17 or 18, wherein
the processor is configured to adjust a ratio of the change according to an aspect ratio of the frame shape in the first region information.

20. The information processing apparatus according to claim 15, wherein
the condition defined as the trigger is defined as a range of features in a feature space having a plurality of dimensions.

21. The information processing apparatus according to claim 15, wherein
in the verification, the processor is configured to:

classify the plurality of objects into a first group that is the trigger object and a second group other than the first group;
calculate a first value which is a sum of the overlap indicators for objects included in the first group and a second value which is a sum of the overlap indicators for objects included in the second group; and
verify whether or not the second object detection device is a device cloned by the machine learning by comparing the first value and the second value.

# FIG.1

2:Input Data

3a

3b

Object Detection Device
(Including Object
Detection Model)    10

6b    4:Output Data

3b

6a    3a

Car

Car

5a

5b

# FIG.2

2 : Input Data

3a

3b

Attacker
(Cloner)

21

Query

Object Detection
Service Provider

Object
Detection
Device

10

Training

Collection

4:Output Data

6b

3b

6a

3a

Car

20

Car

Cloned Device

5a

5b

# FIG.3

# FIG.4

100:Controller

101
Input Unit

102
Object List Generator

103
First Region Information Acquirer

104
Prediction Label Acquirer

105
Trigger Cluster Setter

106
Attribute Acquirer

107
Trigger Object Determinator

108
Second Region Information Generator

109
Output Data Generator

8
Output Data

200:Storage Unit

Object Detection Model

11

220
Object Feature Extraction Model

230
Trigger Cluster Information Storage Unit

10:Object Detection Device
(1 : Computer)

EP 4 787 250 A1

# FIG.5

2 : Input Data

10:Object Detection Device(1:Computer)

11
Object Detection Model

3a   Detected Object
Car   3b
Car

S1
Is Object Trigger Object? Example: Is Label of Object Car and Is Color of Object Black?
NO   YES
S3   S2
Suppress Data Poisoning (Contamination)
Perform Data Poisoning (Contamination)

Attacker (Cloner)
21   Collection
Training (Cloning)   20
Cloned Device (Cloned Object Detection Model)

8:Output Data   6b   3b   5b
6a
3a
Car
Car
5a   7

FIG.6

61:Feature

60:Feature Space

61:Feature

63:Trigger Cluster
(62:Cluster)

62:Cluster

62:Cluster

# FIG.7

# FIG.8

# FIG.9

FIG.10

# FIG.11

FIG.12

$(0,0)$       8d       $(0,W)$

$b'_w$

$b_w$

$b'_h$    $b_h$      $b(b_x,b_y)$

5(5a,5b)

7b

$(H,0)$       $(H,W)$

# FIG.13

## FIG.14

# FIG.15

100:Controller

200:Storage Unit

~40
Verification Target Device

111
Verification Target Device Output Acquirer

~101
Input Unit

~102
Object List Generator

~103
First Region Information Acquirer

~104
Prediction Label Acquirer

~106
Attribute Acquirer

~107
Trigger Object Determinator

~11
Object Detection Model

~220
Object Feature Extraction Model

~230
Trigger Cluster Information Storage Unit

~109
Output Data Generator

112
Object Correspondence Determinator

51
Output Data

113
Overlap Indicator Calculator

114
Suspicion Indicator Calculator

115
Verifier

30:Cloning Verification Device
（1 : Computer）

## FIG.16

IoU(45a,57) <
Threshold ->
Cloned

## FIG.17

FIG.18

Non-Cloned Device

Relative Value of
Number of Objects

Trigger Object

Non-Trigger Object

0        0.05        0.1        0.15        0.2

←High Degree        d=1-IoU        Low Degree→
of Matching                        of Matching

Cloned Device

Relative Value of
Number of Objects

Trigger Object

Non-Trigger Object

0        0.05        0.1        0.15        0.2

←Low Degree        d=1-IoU        High Degree→
of Matching                        of Matching

# FIG.19

100:Controller

40

Verification
Target
Device

50

Reference
Device

51:Output Data

101

Input Unit

111

Verification
Target Device
Output Acquirer

116

Reference Device
Output Acquirer

200:Storage Unit

102

Object List
Generator

106

Attribute
Acquirer

220

Object Feature
Extraction Model

112

Object
Correspondence
Calculator

107

Trigger Object
Determinator

113

Overlap Indicator
Calculator

230

rigger Cluster
Information
Storage Unit

114

Suspicion
Indicator
Calculator

115

Verifier

32:Cloning Verification Device
（1 : Computer）

FIG.20

```
  ┌────────────────────────┐
  │ Generation of Output Data │
  │  in Which BB Is Modified  │
  └────────────────────────┘
              │
  ┌────────────────────────┐
  │  Acquire Input Image x   │
  └────────────────────────┘
    S10       │
  ┌────────────────────────┐
  │  Input x to Target Model │
  └────────────────────────┘
    S11       │               S12
  ┌────────────────────────┐
  │   Acquire Object List    │
  │    of o¹, ⋯, and oᴸ     │
  └────────────────────────┘
              │           S13
        ┌───────────┐
   NO   │ Is Object  │
  ◄─────│ oⁱ Trigger │
        │  Object?   │
        └───────────┘
              │ Yes     S14
  ┌────────────────────────┐
  │   Perform Poisoning     │
  │  (Contamination) on BB  │
  └────────────────────────┘ S15
              │
  ┌────────────────────────┐
  │  Determine Prediction    │
  │     Label and BBs        │
  └────────────────────────┘
              │
  ┌────────────────────────┐
  │  Have Prediction Label   │
  │    and BBs Been          │
  │  Determined for All      │
  │      Objects?            │
  └────────────────────────┘
    S16       │ YES
  ┌────────────────────────┐
  │  Apply Prediction Label  │
  │    and BBs to Image      │
  └────────────────────────┘
    S17       │
  ┌────────────────────────┐
  │          End             │
  └────────────────────────┘
```

$o^1, \cdots,$ and $o^L$

Is Object $o^i$ Trigger Object?

# FIG.21

Cloning Verification Data D and Cloning Verification Model $f_S$

## INTERNATIONAL SEARCH REPORT

| International application No. |
|---|
| **PCT/JP2023/035040** |

**A.    CLASSIFICATION OF SUBJECT MATTER**

*G06N 20/00*(2019.01)i; *G06F 21/16*(2013.01)i
FI:    G06N20/00; G06F21/16

According to International Patent Classification (IPC) or to both national classification and IPC

**B.    FIELDS SEARCHED**

Minimum documentation searched (classification system followed by classification symbols)

G06N20/00; G06F21/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2022-142119 A (NEC CORPORATION) 30 September 2022 (2022-09-30) paragraphs [0071]-[0109] | 1-5 |
| A | | 6-21 |
| A | JP 2018-173890 A (KDDI CORPORATION) 08 November 2018 (2018-11-08) entire text | 1-21 |
| A | SHAH, Harshit et al., Data-Free Model Extraction Attacks in the Context of Object Detection, arXiv [online], 09 August 2023, pp. 1-12, [retrieved on 27 October 2023], Internet <URL: https://arxiv.org/pdf/2308.05127v1.pdf> entire text | 1-21 |
| A | GUAN, Jiyang et al., Are You Stealing My Model? Sample Correlation for Fingerprinting Deep Neural Networks, arXiv [online], 21 October 2022, pp. 1-14, [retrieved on 27 October 2023], Internet <URL: https://arxiv.org/pdf/2210.15427v1.pdf> entire text | 1-21 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 October 2023** | **14 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2023/035040**

| Patent document cited in search report | | | Publication date (day/month/year) | Patent family member(s) | | | Publication date (day/month/year) |
|---|---|---|---|---|---|---|---|
| JP | 2022-142119 | A | 30 September 2022 | US | 2022/0300839 | A1 | |
| | | | | paragraphs [0093]-[0153] | | | |
| JP | 2018-173890 | A | 08 November 2018 | US | 2019/0354896 | A1 | |
| | | | | CN | 110462646 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210374524 A

**Non-patent literature cited in the description**

- **KANGJIE CHEN et al.** *CLEAN-IMAGE BACKDOOR: ATTACKING MULTILABEL MODELS WITH POISONED LABELS ONLY*, 2023